# EUROPÄISCHE PATENTSCHRIFT

(11) **EP 3 974 470 B1**
(45) Veröffentlichungstag und Bekanntmachung des Hinweises auf die Patenterteilung: **10.05.2023**
(21) Anmeldenummer: 20197864.0
(22) Anmeldetag: 23.09.2020
(51) Int. Cl.: C08L 21/00, B60C 1/00, C08L 23/28, C08L 97/00

(54) **KAUTSCHUKZUSAMMENSETZUNG FÜR EINEN INNERLINER FÜR FAHRZEUGLUFTREIFEN**
RUBBER COMPOSITION FOR AN INNER LINER FOR PNEUMATIC VEHICLE TYRES
COMPOSITION DE CAOUTCHOUC POUR UNE DOUBLURE INTERNE POUR PNEUMATIQUES DE VÉHICULE

(43) Veröffentlichungstag der Anmeldung: 30.03.2022
(73) Patentinhaber: SunCoal Industries GmbH, 14974 Ludwigsfelde (DE); Koehler Innovation & Technology GmbH, 77704 Oberkirch (DE)
(72) Erfinder: SCHWAIGER, Bernhard, 50374 Erftstadt (DE); WITTMANN, Tobias, 10965 Berlin (DE); PODSCHUN, Jakob, 12555 Berlin (DE)
(74) Vertreter: Steffan & Kiehne Patentanwälte PartG mbB

(56) Entgegenhaltungen:
- EP-A1- 2 042 346
- EP-A1- 3 053 929
- WO-A1-2020/140155
- WO-A1-2020/202125
- US-A1- 2017 247 255
- US-A1- 2019 284 375
- HANNE WIKBERG ET AL: "Structural and Morphological Changes in Kraft Lignin during Hydrothermal Carbonization", ACS SUSTAINABLE CHEMISTRY & ENGINEERING, Bd. 3, Nr. 11, 6. Oktober 2015 (2015-10-06), Seiten 2737-2745, XP055542953, US ISSN: 2168-0485, DOI: 10.1021/acssuschemeng.5b00925

## Beschreibung

### GEBIET DER ERFINDUNG

Die Erfindung betrifft Kautschukzusammensetzungen, insbesondere vulkanisierbare und vulkanisierte Kautschukzusammensetzungen für Innerliner von Fahrzeugluftreifen. Ferner betrifft die Erfindung ein Kit-of-Parts zu deren Herstellung und Verfahren zu deren Herstellung und Weiterverarbeitung sowie ein Verfahren zur Herstellung von Luftreifen. Des Weiteren betrifft die Erfindung die Verwendung spezieller Füllstoffe aus nachwachsenden Rohstoffen zur Herstellung von der Kautschukzusammensetzungen, insbesondere für Innerliner.

### HINTERGRUND DER ERFINDUNG

Fahrzeugluftreifen sind komplex aufgebaut. Entsprechend vielfältig sind die Anforderungen an diese. Einerseits müssen kurze Bremswege bei trockener und nasser Fahrbahn sichergestellt werden, andererseits müssen diese gute Abriebeigenschaften und einen geringen Rollwiderstand besitzen. Zudem müssen die Fahrzeugreifen die Vorgaben des Gesetzgebers einhalten.

Um das vielfältige Leistungsprofil sicherzustellen, sind die einzelnen ReifenKomponenten spezialisiert und bestehen aus einer Vielzahl verschiedener Materialien, wie Metallen, polymeren Textilstoffen und verschiedenen Komponenten auf Kautschukbasis.

Je nach Ausführung der Luftreifen unterscheidet man zwischen Radialreifen, Diagonalreifen und Diagonalgürtelreifen ("bias-belted"). Ein typischer Luftreifen, am Beispiel eines Gürtelreifens in Radialausführung, umfasst mindestens einen Gürtel, eine Gürtelabdeckung, eine Lauffläche, Verstärkungsstreifen, Seitenwände, Kernreiter, Wulstkabel, einen Innerliner und eine Karkasse.

Der Gürtel besteht üblicherweise aus verdrillten Stahldrahtlagen, die gummiert und winkelförmig angeordnet sind. Er dient im Wesentlichen der strukturellen Festigkeit des Reifens im luftgefüllten Zustand. Der Gürtel sorgt des Weiteren für Fahrstabilität beim Beschleunigen, beim Bremsen und bei Kurvenfahrten. Er beeinflusst den Rollwiderstand und hat einen wesentlichen Anteil an der Laufleistung des Reifens.

Die zwischen der Lauffläche und oberem Gürtel befindliche Gürtelabdeckung dient der Verbesserung der Schnelllauffestigkeit und begrenzt den Reifendurchmesser bei zunehmender Geschwindigkeit.

Die Lauffläche ist wesentlich für die Fahreigenschaften verantwortlich. Die Kautschukmischung der Laufflächen bestimmt hierbei das Abriebverhalten und die dynamischen Fahreigenschaften bei unterschiedlichen Witterungsverhältnissen (auf nasser und trockener Straße, bei kaltem und warmem Wetter, auf Eis und Schnee). Die Profilgestaltung ist wiederum maßgeblich verantwortlich für das Verhalten des Reifens bei Aquaplaning und Nässe, sowie auf Schnee und bestimmt zudem das Geräuschverhalten.

Verstärkungsstreifen werden wahlweise im Bereich des Kernreiters eingesetzt, um die Festigkeit des Reifens sowie die Fahreigenschaften weiter zu verbessern.

Die Seitenwand schützt die Karkasse vor seitlichen Beschädigungen und Witterungseinflüssen. Die Kautschukmischung für die Seitenwand ist flexibel und abriebfest und enthält relativ hohe Mengen an Zuschlagstoffen zum Schutz gegen Alterung und Ozon.

Der Kernreiter sitzt über dem Wulstkabel/Wulstkern. Seine Form und Gestaltung des sorgen für Fahrstabilität und beeinflussen die Lenkpräzision und den Federungskomfort. Kautschukmischungen für Kernreiter sind typischerweise sehr fest und relativ hart, was unter anderem durch einen hohen Vernetzungsgrad mittels hochdosierter Vulkanisationssysteme und durch die Füllstoffauswahl gewährleistet wird.

Das Wulstkabel ist der innere Teil des Reifenwulstes und besteht aus verdrillten gummiummantelten Stahldrähten, die ringförmig gewickelt sind und den Reifen stabil auf der Felge halten. Der Reifenwulst (auch Reifenfuß genannt) presst sich gegen das Felgenhorn und verschließt den Reifen, bei der üblichen schlauchlosen Ausführung, luftdicht. Die Stahldrähte und Kabel im Reifen, im Wulstkern, dem Gürtel oder auch der Karkasse eines Vollstahlreifens müssen sich mit der umgebenden Kautschukmischung fest verbinden, so dass sie als ein Verbund wirken. Dazu werden oft die Stahldrähte mit Messing oder Bronze beschichtet. Erst dann werden sie mit einer Drahthaftmischung zu Bauteilen geformt, die wiederum zu einem Reifenrohling zusammengesetzt werden. Drahthaftmischungen sind relativ fest, durch einen hohen Naturgummianteil rissbeständig und erreichen eine feste Anbindung an die Messing- oder Bronzebeschichtung beispielsweise durch spezielle Harzzuschläge und einen hohen Schwefelanteil. Die dauerhafte Anbindung bildet sich bei der Vulkanisation aus.

Die Karkasse bildet das Grundgerüst des Reifens und besteht aus einer oder mehreren Textilgewebelagen (Rayon, Nylon, Polyester, Aramid) oder Stahlcordlagen (bei Lastkraftwagen; LKW), die in Gummi eingebettet sind. Durch den Reifenluftdruck wird die Karkasse unter Spannung gesetzt und ist daher im Wesentlichen für die Kraftübertragung zwischen Felge und Lauffläche/Straße verantwortlich. Im Reifenfuß ist sie mit dem Reifenwulst verbunden und hält so den Reifen zusammen. Die Karkasse arbeitet als Verbund zwischen den Cordlagen, die die Festigkeit und die Kraftübertragung garantieren, und einer Gummimischung, die die parallelen Corde umhüllt. Die Cordmischung muss daher aufgrund der ständigen Deformation des Reifens ermüdungsbeständig sein, was meist durch einen Verschnitt aus Naturkautschuk und Synthesekautschuken erreicht wird, sich gleichzeitig aber auch mit den Corden fest verbinden. Dazu werden die Corde nach der Verzwirnung mit einer Kautschukmischung beschichtet. Die so ausgerüsteten Corde werden mit der unvulkanisierten Kautschukmischung belegt. Harzsysteme in den speziellen Mischungen reagieren dann während der Vulkanisation mit der Cordausrüstung zu einem dauerhaften Verbund.

Moderne Reifen sind, wie vorstehend beschrieben, in der Regel schlauchlos. Der sogenannte Innerliner, ist eine weitestgehend luftundurchlässige, radial innen angeordnete Schicht einer Kautschukzusammensetzung. Er wird auch Innenseele oder Innenplatte genannt, und dient dazu, dass die in den Reifen eingepumpte Luft über einen langen Zeitraum nicht entweicht, da der Luftdruck die Fahreigenschaften und die Haltbarkeit des Reifens wesentlich beeinflusst. Hinzu kommt, dass der Innendruck einen Einfluss auf den Rollwiderstand des Reifens besitzt. Ein Nachlassen des Luftdrucks führt zu einer höheren dynamischen Verformung des Reifens, was wiederum dazu führt, dass ein Teil der Bewegungsenergie unerwünscht in Wärmeenergie umgewandelt wird. Dies hat einen negativen Einfluss auf den Kraftstoffverbrauch des Fahrzeugs und somit auch auf die damit verbundene Kohlendioxid-Emission.

Ferner schützt der Innerliner die Karkasse vor dem Eindiffundieren von Luft und Feuchtigkeit, und verhindert so dass die Festigkeitsträger der Karkasse und/oder des Gürtels Schaden nehmen. Damit der Innerliner weitestgehend luftdicht bleibt, sollte er auch eine gute Riss- und Ermüdungsbeständigkeit aufweisen, damit im Fahrbetrieb keine Risse entstehen, die die Luftdichtigkeit beeinträchtigen.

Aufgrund dieses besonderen Anforderungsprofils, besitzen Kautschukmischungen für Innerliner sowohl hinsichtlich der einzusetzenden Kautschuke als auch den einzusetzenden Füllstoffen sowie den Gewichtsverhältnissen der Bestandteile zueinander gänzlich andere Zusammensetzungen als die Kautschukmischungen der anderen Reifenbestandteile, müssen aber dennoch kompatibel mit den angrenzenden Reifenbestandteilen sein, insbesondere eine gute Haftung zu diesen aufweisen. Neben der Art der Kautschuke spielen auch Mindestmengen für verschiedene Kautschuke in der Kautschukmischung ebenso eine Rolle, wie verschiedene spezifische Parameter und Eigenschaften der einsetzbaren Füllstoffe.

Als Kautschuke für den Innerliner werden unter anderem Halobutyl-Kautschuke wie Chlorobutyl-Kautschuk oder Bromobutyl-Kautschuk, gelegentlich im Verschnitt mit anderen Kautschuken, eingesetzt. Butyl- und Halobutyl-Kautschuke weisen eine geringe Gasdurchlässigkeit auf. Der Verschnitt von Halobutyl-Kautschuken mit anderen Kautschuken, wie beispielsweise Naturkautschuk, erfolgt aus Gründen der Erhöhung der Konfektionsklebrigkeit, der Kostenreduzierung und der Adjustierung der mechanischen Eigenschaften.

Durch die Zudosierung von voluminösen wenig oder nicht aktiven Füllstoffen in die Kautschukmischung der Innerliner kann deren Luftdichtigkeit weiter erhöht werden. Zu den bisher verwendeten Füllstoffen zählen insbesondere Furnace-Ruße.

Innerliner müssen, um bei dynamischen Beanspruchungen Rissbildungen zu verhindern, einen ausgewogenen Elastizitätsmodul und eine angepasste Härte aufweisen, was aber in der Regel im Widerspruch zu einem hohen Anteil an nicht aktiven Füllstoffen steht. Daher werden der Kautschukzusammensetzung häufig Mineralölweichmacher zugesetzt, die den Elastizitätsmodul und die Härte der Zusammensetzung reduzieren, aber andererseits gleichzeitig die Gasdurchlässigkeit wieder erhöhen, woraus sich ein relativ enger, optimaler Bereich für die eingesetzten Mineralölweichmacher- und Füllstoffmengen ergibt.

Zudem besitzen viele Füllstoffe wie beispielsweise Ruße des Typs N 660 relativ hohe Dichten von etwa 1,8 g/cm³ oder höher. Dementsprechend weisen die mit derartigen Füllstoffen compoundierte Kautschukzusammensetzungen ebenfalls eine höhere Dichte und somit bei gleichem Volumen ein höheres Gewicht auf. Die höhere Dichte des Füllstoffs bewirkt jedoch auch ein höheres Gewicht des Innerliners und schließlich des Luftreifens, was jedoch wiederum einen höheren Kraftstoffverbrauch nach sich zieht.

Darüber hinaus werden Industrieruße (Carbon Black) petrochemisch durch unvollständige Verbrennung oder Pyrolyse von Kohlenwasserstoffen hergestellt. Unter Umweltgesichtspunkten ist jedoch die Verwendung fossiler Energieträger zur Herstellung von Füllstoffen zu vermeiden beziehungsweise auf ein Minimum zu reduzieren. Stattdessen ist anzustreben Füllstoffe auf der Basis von Biomasse zur Compoundierung bereitzustellen, welche die vielfältigen Anforderungen an Innerliner erfüllen.

Im Bereich der Herstellung von Kautschukzusammensetzungen unter anderem zur Verwendung in Reifen im Allgemeinen, offenbart die WO 2017/085278 A1 die Verwendung von sogenanntem HTC-Lignin, einem durch hydrothermale Carbonisierung umgesetzten Lignin, als Ersatzfüllstoff für Industrieruße.

Lignine sind feste Biopolymere, die in pflanzliche Zellwände eingelagert werden und so eine Verholzung (Lignifizierung) von Pflanzenzellen bewirken. Sie sind daher in biologisch nachwachsenden Rohstoffen enthalten und besitzen - in hydrothermal carbonisierter Form - Potenzial als eine umweltfreundliche Alternative für Industrieruße in Kautschukzusammensetzungen.

Die Verwendung derartiger Füllstoffe in speziellen Kautschukzusammensetzungen wie sie beispielsweise in Innerlinern vorkommen wird jedoch nicht explizit beschrieben, zumal nichts über die möglichen Wechselwirkungen der häufig reaktive Atome tragenden Innerliner-Kautschuke mit den reaktiven Oberflächengruppen von HTC-Ligninen bekannt ist und die daraus resultierenden Eigenschaften der vulkanisierten Kautschuke völlig unerforscht sind.

Auch die WO 2017/194346 A1 beschreibt den Einsatz von HTC-Ligninen in Kautschukmischungen für Luftreifenkomponenten, insbesondere zusammen mit einer Methylen-Donor-Verbindung wie beispielsweise Hexa(methoxymethyl)melamin, um die Steifheit einer ausgehärteten Kautschukkomponente eines Luftreifens zu erhöhen, und unter anderem um Phenolharze zu ersetzen und/oder in Kombination mit silanbasierten Kupplungsmitteln. Eine der in der WO 2017/194346 angesprochenen Aufgaben besteht in der Herabsetzung des Rollwiderstands der Reifen. Als geeignete Kautschukmaterialien werden Naturkautschuk, Polybutadienkautschuk, Styrol-Butadien-Kautschuk und Polyisopren-Kautschuk genannt. Die WO 2017/194346 A1 offenbart die Eignung der darin beschriebenen Kautschukmischungen für die Laufflächenbereiche eines Luftreifens, die Seitenwände und die Reifenwulst. Eine Kautschukmischung, welche die Erfordernisse eines Innerliners erfüllt wird nicht beschrieben.

Auch EP 3 470 457 A1 offenbart vulkanisierbare schwefelhaltige Kautschukmischungen für Fahrzeugreifen. Als Füllstoffe für die getesteten lösemittelpolymerisierten Styrol-Butadien-Kautschuke (SSBR) wurden aus verschiedenen Ausgangsprodukten gewonnene HTC-Kohlen eingesetzt, die unter anderem unter Zusatz von Metallhalogeniden hergestellt wurden und BET-Oberflächen von bis zu über 180 m²/g aufweisen. Unter diesen wurden als besonders bevorzugt solche HTC-Kohlen mit einer BET-Oberfläche von 90 bis 140 m²/g herausgestellt, die eine verstärkte Oberflächenrauheit und eine optimierte Oberflächenfunktionalität aufweisen sollen.

In Zusammenschau des Stands der Technik besteht daher ein besonderer Bedarf an Kautschukzusammensetzungen beziehungsweise Kautschukmischungen die für Innerliner von Luftreifen geeignet sind, umweltfreundliche, auf nachwachsenden Rohstoffen basierende Ruß-Ersatzmaterialien als Füllstoffe enthalten, und vulkanisierte Kautschukzusammensetzungen liefern, die den Anforderungen an Innerliner von Luftreifen, insbesondere hinsichtlich der Luftdichtigkeit und der Rissbeständigkeit genügen und welche vorzugsweise eine geringere Dichte als rußhaltige Kautschukzusammensetzungen sowie eine gute Reißbeständigkeit und Weiterreißbeständigkeit aufweisen.

### ZUSAMMENFASSUNG DER ERFINDUNG

Die der Erfindung zugrundeliegenden Probleme konnten durch Bereitstellung einer Kautschukzusammensetzung gelöst werden, umfassend
eine Kautschukkomponente, die
   mindestens einen Halobutyl-Kautschuk gewählt aus der Gruppe bestehend aus Bromobutyl-Kautschuk und Chlorobutyl-Kautschuk umfasst, und
eine Füllstoffkomponente, die
   mindestens einen Füllstoff F1 umfasst, der
   einen ¹⁴C-Gehalt im Bereich von 0,20 bis 0,45 Bq/g Kohlenstoff besitzt;
   einen Kohlenstoffgehalt im Bereich von 60 Gew.-% bis 85 Gew.-% bezogen auf den aschefreien und wasserfreien Füllstoff besitzt;
   eine STSA-Oberfläche im Bereich von 10 m²/g Füllstoff bis 50 m²/g Füllstoff aufweist; und
   an seiner Oberfläche saure Hydroxylgruppen aufweist;
und wobei der Anteil an Halobutyl-Kautschuk in der Kautschukzusammensetzung 70 bis 100 phr beträgt.

Die hierin verwendete Angabe phr (parts per hundred parts of rubber by weight) ist die in der Kautschukindustrie übliche Mengenangabe für Mischungsrezepturen. Die Dosierung der Gewichtsteile der einzelnen Bestandteile wird dabei stets auf 100 Gewichtsteile der gesamten Masse aller in der Mischung vorhandenen Kautschuke bezogen.

Diese Kautschukzusammensetzung wird im Folgenden auch als erfindungsgemäße Kautschukzusammensetzung oder Kautschukzusammensetzung gemäß der vorliegenden Erfindung bezeichnet.

Des Weiteren betrifft die Erfindung eine vulkanisierbare Kautschukzusammensetzung, die eine erfindungsgemäße Kautschukzusammensetzung und ein Vulkanisations-System, enthaltend Zinkoxid und/oder Schwefel, umfasst, oder aus diesen besteht.

Diese vulkanisierbare Kautschukzusammensetzung wird im Folgenden auch als erfindungsgemäße vulkanisierbare Kautschukzusammensetzung oder vulkanisierbare Kautschukzusammensetzung gemäß der vorliegenden Erfindung bezeichnet.

Weiterer Gegenstand der Erfindung ist ein Kit-of-Parts, umfassend, in räumlich getrennter Form, eine erfindungsgemäße Kautschukzusammensetzung und ein Vulkanisations-System enthaltend Zinkoxid und/oder Schwefel.

Dieses Kit-of-Parts wird im Folgenden auch als erfindungsgemäßes Kit-of-Parts oder Kit-of-Parts gemäß der vorliegenden Erfindung bezeichnet.

Gegenstand der vorliegenden Erfindung ist auch ein Verfahren zur Herstellung einer erfindungsgemäßen Kautschukzusammensetzung und einer erfindungsgemäßen vulkanisierbaren Kautschukzusammensetzung, wobei letztere erhalten wird indem in einer ersten Stufe die erfindungsgemäße Kautschukzusammensetzung als Grundmischung (Masterbatch) hergestellt wird, indem die Bestandteile der Kautschukzusammensetzung compoundiert werden und in einer zweiten Stufe die Zumischung der Bestandteile des Vulkanisation-Systems erfolgt.

Diese Verfahren werden auch als erfindungsgemäße Verfahren zur Herstellung der erfindungsgemäßen Kautschukzusammensetzung bzw. der erfindungsgemäßen vulkanisierbaren Kautschukzusammensetzung bezeichnet.

Weiterer Gegenstand der Erfindung ist ein Verfahren zur Weiterverarbeitung der erfindungsgemäßen, vulkanisierbaren Kautschukzusammensetzungen in dem diese durch Kalandrieren, Extrudieren oder im sogenannten Roller-Head-Verfahren zu einer Bahn geformt werden.

Dieses Verfahren wird auch als erfindungsgemäßes Weiterbearbeitungsverfahren oder Weiterbearbeitungsverfahren gemäß der vorliegenden Erfindung bezeichnet.

Gegenstand der Erfindung ist auch ein Verfahren zur Herstellung eines Luftreifens, umfassend das erfindungsgemäße Weiterverarbeitungsverfahren, gefolgt von einem Schritt des Zurechtschneidens der erhaltenen Bahn zu einem Innerliner von Luftreifen und umfassend den nachfolgenden Schritt der Vulkanisation des so erhaltenen Innerliners vorzugsweise zusammen mit der Karkasse eines Luftreifens.

Dieses Verfahren wird auch als erfindungsgemäßes Verfahren zur Herstellung eines Luftreifens oder als Verfahren zur Herstellung eines Luftreifens gemäß der vorliegenden Erfindung bezeichnet.

Ebenfalls Gegenstand der vorliegenden Erfindung ist die Verwendung des im Rahmen der Erfindung geeigneten wie oben charakterisierten Füllstoffe zur Herstellung von Kautschukzusammensetzungen für Innerliner.

Diese Verwendung wird auch als erfindungsgemäße Verwendung oder Verwendung gemäß der vorliegenden Erfindung bezeichnet.

### DETAILLIERTE BESCHREIBUNG DER ERFINDUNG

Im Folgenden werden die in den erfindungsgemäßen obengenannten Kautschukzusammensetzungen, Verfahren und der obengenannten Verwendung eingesetzten Bestandteile der Kautschukzusammensetzungen sowie besonders geeignete Verfahrensführungen im Detail beschrieben.

### Kautschukzusammensetzung

### Kautschuke

Im Rahmen der vorliegenden Erfindung werden ein oder mehrere Halobutyl-Kautschuke, gewählt aus der Gruppe bestehend aus Chlorobutyl-Kautschuken (CIIR; chloro-isobutene-isoprene rubber) und Bromobutyl-Kautschuken (BIIR; bromoisobutene-isoprene rubber), eingesetzt.

Halobutyl-Kautschuke sind halogenierte Isobuten-Isopren-Kautschuke. Sie sind erhältlich durch Halogenierung, insbesondere Bromierung und/oder Chlorierung von Butyl-Kautschuken.

Butyl-Kautschuke sind wiederum überwiegend aus Isobuten-Einheiten und im Übrigen aus Isopren-Einheiten aufgebaut. Besonders bevorzugt beträgt der Anteil an Isobuten-Einheiten 95 bis 99,5 mol-% und der Anteil der Isopren-Einheiten 0,5 bis 5 mol-%, ganz besonders bevorzugt beträgt der Anteil an Isobuten-Einheiten 97 bis 99,2 mol-% und der Anteil der Isopren-Einheiten 0,8 bis 3 mol-%, wobei sich der Anteil an Isobuten-Einheiten und Isopren-Einheiten vorzugsweise zu 100 mol-% der im Polymer einpolymerisiert enthaltenen Monomere addiert. Butyl-Kautschuke besitzen in der Regel eine geringe Gas- und Feuchtigkeitsdurchlässigkeit.

Die Butylkautschuke weisen aufgrund der einpolymerisierten Isopren-Einheiten Kohlenstoff-Kohlenstoff-Doppelbindungen auf, die sowohl zur Vulkanisierung dienen, als auch zur Modifizierung mit Halogenen wie insbesondere Chlor und Brom.

Die durch die Modifizierung mit Halogenen (Halogenierung) erhältlichen Halobutyl-Kautschuke besitzen eine höhere Reaktivität als die Butyl-Kautschuke und dadurch ein breiteres Spektrum in Bezug auf die Vulkanisationsmöglichkeiten, wie insbesondere die Co-Vulkanisationsmöglichkeiten mit anderen Kautschuken wie beispielsweise Naturkautschuk (NR; natural rubber), Butyl-Kautschuk (IIR; isobuten isoprene rubber) und Styren-Butadien-Kautschuk (SBR, styrene butadiene rubber).

Unter den Halobutyl-Kautschuken sind aufgrund der schwächeren Kohlenstoff-Brom Bindung die Bromobutyl-Kautschuke im Vergleich zu den eine Kohlenstoff-Chlor-Bindung aufweisenden Chlorobutyl-Kautschuken, reaktiver, wodurch sich den Bromobutyl-Kautschuken ein noch breiteres Spektrum an Vulkanisationssystemen eröffnet. Bromobutyl-Kautschuke vulkanisieren rascher und besitzen üblicherweise eine bessere Haftung zu Dienkautschuken.

Die Bromobutyl-Kautschuke sind im Rahmen der vorliegenden Erfindung unter den Halobutyl-Kautschuken besonders bevorzugt.

Es ist jedoch auch möglich als Halobutyl-Kautschuk-Komponente Mischungen aus einem oder mehreren Bromobutyl-Kautschuken mit einem oder mehreren Chlorobutyl-Kautschuken einzusetzen. Hierin erhöhen die Bromobutyl-Kautschuke die Vulkanisationsrate.

Im Rahmen der vorliegenden Erfindung geeignete Chlorobutyl-Kautschuke (CIIR) enthalten vorzugsweise zwischen 1,1 und 1,3 Gew.-% Chlor, die Bromobutylkautschuke (BIIR) enthalten vorzugsweise zwischen 1,9 bis 2,1 Gew.-% Brom. Dies entspricht einem Anteil an reaktiven Stellen von etwa 2 Mol-%.

Die Viskositäten der Halobutyl-Kautschuke liegen vorzugsweise zwischen 35 und 55 Mooney-Einheiten (ML (1 + 8), 125°C). Die Produkte enthalten ebenso wie Butylkautschuk nahezu keine Nebenbestandteile (Kautschukanteil > 98,5). Die Halobutyl-Kautschuke enthalten vorzugsweise Stabilisatoren, insbesondere sterisch gehinderte Phenole als Stabilisatoren.

Die erfindungsgemäße Kautschukzusammensetzung kann neben den Halobutyl-Kautschuken einen oder mehrere weitere, von den Halobutyl-Kautschuken verschiedene Kautschuke enthalten.

Als weitere, von den Halobutyl-Kautschuken verschiedene Kautschuke sind, sofern vorhanden, besonders bevorzugt Naturkautschuk, Butyl-Kautschuk und Styren-Butadien-Kautschuk.

So kann beispielsweise durch die Zumischung von Naturkautschuk zu Halobutyl-Kautschuken die Haftfähigkeit zu anderen kautschukbasierten Reifenbestandteilen erhöht werden, insbesondere gegenüber Allzweckkautschuken. Durch Vernetzung der verschiedenen Kautschuke lassen sich auch Synergien hinsichtlich der Zugfestigkeit erzeugen, so dass diese auch über der Zugfestigkeit der einzelnen Kautschuke liegen können. Dies gilt insbesondere bei der Verwendung von Vulkanisationssystemen, umfassend Zinkoxid, Schwefel und ein Thiazol wie beispielsweise Mercaptobenzothiazyldisulfid (MBTS). Andererseits erhöht sich üblicherweise durch die Zumischung von Natur-Kautschuk die Gas- und Feuchtigkeitsdurchlässigkeit des vulkanisierten Endprodukts.

Die Zumischung von Styren-Butadien-Kautschuken zu Halobutyl-Kautschuken kann wie die Zumischung von Naturkautschuken erfolgen, besitzt gegenüber diesen jedoch üblicherweise keine besonderen Vorteile, so dass der Einsatz von Naturkautschuken dem der Styren-Butadien-Kautschuke zumeist vorzuziehen ist.

Die Zumischung von bis zu 30 phr, vorzugsweise bis maximal 20 phr an Butyl-Kautschuk zu Halobutyl-Kautschuk besitzt typischerweise nur einen geringen bis keinen Einfluss auf die Gas- und Feuchtigkeitsdurchlässigkeit des vulkanisierten Endprodukts, kann jedoch, wo erwünscht, die Vulkanisationsrate verringern und die Hitzebeständigkeit erhöhen.

Die Gesamtmenge an Halobutyl-Kautschuk beträgt 70 bis 100 phr, bevorzugt 80 bis 100 phr, besonders bevorzugt 90 bis 100 phr und am bevorzugtesten 100 phr.

Für den Fall, dass die Kautschukmischung weniger als 100 phr Halobutyl-Kautschuk enthält, ist wenigstens ein weiterer Kautschuk in der Kautschukzusammensetzung enthalten, vorzugsweise einer der vorgenannten Kautschuke, sodass die Gesamtmenge an enthaltenen Kautschuken 100 phr beträgt.

Dies bedeutet, dass die Menge anderer Kautschuke, die von den Halobutyl-Kautschuken verschieden sind, 0 bis 30 phr, vorzugsweise 0 bis 20 phr, besonders bevorzugt 0 bis 10 phr und ganz besonders bevorzugt 0 phr beträgt.

### Füllstoffe F1

In der Füllstoffkomponente zwingend eingesetzt wird ein Füllstoff F1, der
einen ¹⁴C-Gehalt im Bereich von 0,20 bis 0,45 Bq/g Kohlenstoff, vorzugsweise 0,23 bis 0,42 Bq/g Kohlenstoff besitzt;
einen Kohlenstoffgehalt im Bereich von 60 Gew.-% bis 85 Gew.-%, vorzugsweise 63 Gew.-% bis 80 Gew.-% und besonders bevorzugt 65 Gew.-% bis 75 Gew.-% und ganz besonders bevorzugt 68 Gew.-% bis 73 Gew.-%, bezogen auf den aschefreien und wasserfreien Füllstoff aufweist;
eine STSA-Oberfläche im Bereich von 10 m²/g Füllstoff bis 50 m²/g Füllstoff, vorzugsweise 15 m²/g Füllstoff bis 45 m²/g Füllstoff und besonders bevorzugt 20 m²/g Füllstoff bis 40 m²/g Füllstoff aufweist;
und an seiner Oberfläche saure Hydroxylgruppen aufweist.

Derartige Füllstoffe F1 werden im Folgenden als "erfindungsgemäß einzusetzende Füllstoffe" bzw. "erfindungsgemäß einsetzbare Füllstoffe" bzw. "erfindungsgemäß eingesetzte Füllstoffe" bezeichnet.

Der oben angegebene erforderliche ¹⁴C-Gehalt wird von Füllstoffen erfüllt, die aus Biomasse durch weitere Behandlung respektive Umsetzung, vorzugsweise Zersetzung derselben erhalten werden, wobei die Zersetzung thermisch, chemisch und/oder biologisch erfolgen kann, vorzugsweise thermisch und chemisch erfolgt. Aus fossilen Materialien wie insbesondere fossilen Brennstoffen erhaltene Füllstoffe fallen somit nicht unter die Definition des erfindungsgemäß einzusetzenden Füllstoffs gemäß der vorliegenden Erfindung, da diese keinen entsprechenden ¹⁴C-Gehalt besitzen.

Als Biomasse wird hierin prinzipiell jegliche Biomasse bezeichnet, wobei der Begriff "Biomasse" hierin sogenannte Phytomasse, das heißt aus Pflanzen stammende Biomasse, Zoomasse, das heißt aus Tieren stammende Biomasse sowie mikrobielle Biomasse, das heißt aus Mikroorganismen einschließlich Pilzen stammende Biomasse umfasst, es sich bei der Biomasse um Trockenbiomasse oder Frischbiomasse handelt, und diese aus toten oder lebenden Organismen stammt.

Die hierin zur Herstellung der Füllstoffe besonders bevorzugte Biomasse, ist Phytomasse, vorzugsweise tote Phytomasse. Tote Phytomasse umfasst unter anderem abgestorbene, abgestoßene oder abgetrennte Pflanzen und Bestandteile. Dazu zählen beispielsweise abgebrochene und abgerissene Blätter, Seitensprosse, Zweige und Äste, das gefallene Laub, gefällte oder beschnittene Bäume, sowie Samen und Früchte und daraus gewonnene Bestandteile, aber auch Sägemehl, Sägespäne und andere aus der Holzverarbeitung stammende Produkte.

Der oben angegebene Kohlenstoffgehalt wird in der Regel von den auf der Zersetzung von Biomasse basierenden Füllstoffen erfüllt und lässt sich durch Elementaranalyse gemäß DIN 51732: 2014-7 bestimmen.

Vorzugsweise besitzen die Füllstoffe einen Sauerstoffgehalt im Bereich von 15 Gew.-% bis 30 Gew.-%, vorzugsweise 17 Gew.-% bis 28 Gew.-% und besonders bevorzugt 20 Gew.-% bis 25 Gew.-%, bezogen auf den aschefreien und wasserfreien Füllstoff. Der Sauerstoffgehalt lässt sich durch Hochtemperaturpyrolyse ermitteln, beispielsweise mit Hilfe des EuroEA3000 CHNS-O Analyzers der Firma EuroVector S.p.A.

Zudem weisen die Füllstoffe der Eingangs definierten Art an ihrer Oberfläche saure Hydroxylgruppen auf (sogenannte oberflächenverfügbare saure Hydroxylgruppen). Eine Bestimmung der oberflächenverfügbaren, sauren Hydroxylgruppen kann qualitativ und quantitativ kolorimetrisch gemäß Sipponen erfolgen. Das Verfahren nach Sipponen beruht auf der Adsorption des basischen Farbstoffs Azure B an die an der Füllstoffoberfläche zugänglichen sauren Hydroxylgruppen. Findet eine entsprechende Adsorption unter den Bedingungen statt, die im nachfolgend genannten Artikel unter Punkt 2.9 (S. 82) angegeben sind, so sind saure, oberflächenverfügbare Hydroxylgruppen im Sinne der vorliegenden Erfindung vorhanden. Entsprechende Details sind dem Artikel "Determination of surface-accessible acidic hydroxyls and surface area of lignin by cation dye adsorption" (Bioresource Technology 169 (2014) 80-87) entnehmbar. Bei einer quantitativen Bestimmung wird die Menge der oberflächenverfügbaren sauren Hydroxylgruppen in mmol/g Füllstoff angegeben. Vorzugsweise liegt die Menge an oberflächenverfügbaren sauren Hydroxylgruppen im Bereich von 0,05 mmol/g bis 40 mmol/g, besonders bevorzugt 0,1 mmol/g bis 30 mmol/g und ganz besonders bevorzugt 0,15 bis 30 mmol/g. Bevorzugte oberflächenverfügbare saure Hydroxylgruppen sind phenolische Hydroxylgruppen.

Deutliche Unterschiede zwischen den auf Biomasse basierenden Füllstoffen bestehen auch in deren BET-Oberflächen (spezifische Gesamtoberfläche nach Brunauer, Emmett und Teller) sowie den externen Oberflächen (STSA-Oberfläche; Statistical Thickness Surface Area).

So beschreibt beispielsweise die WO 2017/085278 A1 für hydrothermal carbonisierte Lignine, das heißt auf toter, ligninhaltiger Phytomasse basierenden Füllstoffen, die durch hydrothermale Behandlung erhalten wurden, STSA-Oberflächen im Bereich von 5 bis 200 m²/g. Im experimentellen Teil der Druckschrift werden sogar solche mit einer STSA-Oberfläche von lediglich 2,6 m²/g genannt.

Alle vorgenannten Bereiche, welche die Füllstoffe F1 hinsichtlich ihres ¹⁴C-Gehalts, des Kohlenstoff- und Sauerstoffgehalts, der STSA-Oberfläche und der oberflächenverfügbaren sauren Gruppen charakterisieren, gelten für alle erfindungsgemäß einzusetzenden Füllstoffe F1 gleichermaßen, vorzugsweise für ligninbasierte Füllstoffe, welche hierin eine bevorzugte Klasse der aus Phytomasse herstellbaren Füllstoffe darstellen.

Röthemeyer und Sommer klassifizieren in ihrem Lehrbuch "Kautschuk Technologie - Werkstoffe Verarbeitung Produkte" (3. neu bearbeitete und erweiterte Auflage, 2013, Seiten 1196-1197) diverse Kautschuke in drei Gruppen, solche mit niedriger Polariät und hohem Quellungsgrad in Öl, solche mit mittlerer Polarität und mittlerem Quellungsgrad in Öl und solche mit hoher Polarität und niedrigem Quellungsgrad in Öl. Die Halobutyl-Kautschuke besitzen trotz ihrer Reaktivität eine niedrige Polarität.

Besonders überraschend ist daher die gute Verträglichkeit der erfindungsgemäß einzusetzenden Füllstoffe, insbesondere auch der ligninbasierten Füllstoffe mit den lediglich eine niedrige Polarität aufweisenden Halobutyl-Kautschuken, da die erfindungsgemäß einzusetzenden Füllstoffe eine im Vergleich zu den typischen Industrierußen hohe Polarität besitzen, die unter anderem auf den Gehalt an oberflächenverfügbaren, sauren Hydroxylgruppen zurückzuführen ist. Aber auch der im Vergleich zu Industrierußen höhere Sauerstoffgehalt trägt hierzu bei.

Unter den ligninbasierten Füllstoffen ist wiederum hydrothermal behandelte ligninhaltige Phytomasse besonders bevorzugt. Bevorzugte Behandlung ist eine hydrothermale Behandlung bei Temperaturen zwischen 150°C und 250°C im Beisein von flüssigem Wasser. Hierbei erhöht sich im Vergleich zum Ausgangslignin in der Regel der Kohlenstoffanteil und es verringert sich der Sauerstoffanteil. Geeignete Behandlungsverfahren sind zum Beispiel in WO 2017/085278 A1 beschrieben. Ligninbasierte Füllstoffe, die durch eine hydrothermale Behandlung gewonnen wurden, werden im Folgenden auch als HTC-Lignine bezeichnet. Eine hydrothermale Behandlung bei Temperaturen zwischen 150°C und 250° im Beisein von flüssigem Wasser wird im Folgenden auch als hydrothermale Carbonisierung bezeichnet. Die im Folgenden beschriebenen HTC-Lignine stellen die bevorzugten, im Rahmen der vorliegenden Erfindung einzusetzenden Füllstoffe dar.

Die erfindungsgemäße Kautschukzusammensetzung enthält vorzugsweise 50 bis 100, besonders bevorzugt 55 bis 85, ganz besonders bevorzugt 60 bis 80 wie beispielsweise 65 bis 75 phr des wie oben definierten, erfindungsgemäß einzusetzenden Füllstoffs. Werden Füllstoffe mit im höheren Bereich der beanspruchten STSA-Oberfläche eingesetzt, so kann deren Dosierung herabgesetzt werden, was zu einem Innerliner mit niedrigerem Gewicht und der STSA-Oberfläche zugewiesenen Verstärkungseigenschaften führt. Wird ein Füllstoff mit einer STSA-Oberfläche im niedrigeren beanspruchten Bereich eingesetzt, kann die Dosierung des Füllstoffs deutlich erhöht werden, was zu einer verringerten Gaspermeation und verbesserter Rissbeständigkeit führt. Die Verstärkungseigenschaften erreichen dann nicht das Niveau der Kautschukzusammensetzungen, die mit einem Füllstoff verstärkt werden, der eine höhere STSA-Oberfläche aufweist.

### HTC-Lignine

HTC-Lignine werden durch hydrothermale Carbonisierung ligninhaltiger Rohstoffe erhalten und stellen besonders bevorzugte, erfindungsgemäß einsetzbare Füllstoffe F1 dar. Die Eigenschaften von HTC-Ligninen können in weiten Bereichen variieren. So unterscheiden sich verschiedene HTC-Lignine beispielsweise in ihrer BET- und STSA-Oberfläche, dem Aschegehalt, pH-Wert und Hitzeverlust sowie der Dichte und Partikelgröße und der Menge oberflächenverfügbarer saurer Hydroxylgruppen.

Im Rahmen der vorliegenden Erfindung dienen als erfindungsgemäß einzusetzende Füllstoffe vorzugsweise spezielle HTC-Lignine als Ersatzstoff für die üblicherweise in Kautschukzusammensetzungen für Innerliner enthaltenen Ruße. Die Herstellung der erfindungsgemäß einsetzbaren HTC-Lignine ist beispielsweise in der WO 2017/085278A1 beschrieben.

Während die oben genannten Druckschriften WO 2017/085278 A1 und WO 2017/194346 A1 allgemein die Verwendung von HTC-Ligninen als mögliche Ersatzstoffe für Ruße in Reifen erwähnen, darf daraus nicht geschlossen werden, dass das Verhalten von HTC-Ligninen in gewöhnlichen Kautschukzusammensetzungen auf die speziellen Kautschukzusammensetzungen der vorliegenden Erfindung übertragbar ist, welche reaktivere Halobutyl-Kautschuke enthalten. Dies gilt zumal für deren Einsatz in auf Halobutyl-Kautschuken basierenden Kautschukzusammensetzungen, da diese völlig andere Eigenschaften als gewöhnliche Kautschukzusammensetzungen besitzen und aufgrund der hohen Reaktivität der Halogenatome, insbesondere der Chlor- und vor allem der Bromatome mit einer Wechselwirkung oder gar Reaktion gegenüber den erfindungsgemäß einsetzbaren Füllstoffen, insbesondere den HTC-Ligninen zu rechnen ist, die eine im Vergleich zu Industrierußen chemisch unterschiedliche Oberfläche und Beschaffenheit besitzen. Insbesondere der bereits oben erwähnte Unterschied zwischen Industrierußen und den im Rahmen der vorliegenden Erfindung einzusetzenden Füllstoffe in Bezug auf das Vorhandensein oberflächenverfügbarer, saurer Hydroxylgrupppen, vorzugsweise phenolischer Hydroxylgruppen, führt zu überraschend guter Einarbeitbarkeit der Füllstoffe und Kompatibilität derselben mit der Kautschuk-Komponente, selbst ohne Einsatz von Kompatibilisatoren, insbesondere ohne Einsatz von Silan-Verbindungen in den erfindungsgemäßen Kautschukzusammensetzungen. Die daraus erhaltenden vulkanisierten Produkte besitzen eine überraschend gute Performance, bei welcher selbst kritische Eigenschaften, wie die für Innerliner geforderte äußerst geringe Gasdurchlässigkeit, verbessert sind.

Daher bedurfte es in der vorliegenden Erfindung der gezielten Auswahl spezieller Füllstoffe. HTC-Lignine haben sich unter diesen als besonders geeignet erwiesen, da diese sowohl eine hervorragende Kompatibilität mit den anderen Bestandteilen der Kautschukzusammensetzung aufweisen, als auch eine Kompatibilität mit den unten beschriebenen speziellen Vulkanisations-Systemen besitzen und welche insbesondere die gewünschten Gasbarriere-Eigenschaften ermöglichen und die Rissbildung und ein Weiterreißen verhindern.

Die erfindungsgemäß einzusetzenden Füllstoffe und insbesondere die HTC-Lignine, welche in der vorliegenden Erfindung zum Einsatz kommen, ermöglichen die Einstellung einer guten Balance verschiedener Eigenschaften in Bezug auf deren Einsatz in Innerlinern. So besitzen diese gute Verstärkungseigenschaften, ausgedrückt durch Spannungswerte und Reißfestigkeit, eine hohe Bruchdehnung und ermöglichen eine gute Dispergierbarkeit der Füllstoffteilchen im Kautschuk.

Um dies zu erreichen, ist es vorteilhaft, dass die im Rahmen der Erfindung eingesetzten Füllstoffe, vorzugsweise die HTC-Lignine - neben der oben angegebenen STSA-Oberfläche - eine BET-Oberfläche im Bereich von 15 bis 50 g/m², vorzugsweise im Bereich von 18 bis 45 g/m² und besonders bevorzugt 20 bis 40 g/m² besitzen.

Vorzugsweise besitzen die erfindungsgemäß eingesetzten Füllstoffe, vorzugsweise die HTC-Lignine, einen pH-Wert > 7 und < 9, besonders bevorzugt > 7,5 und < 8,5.

Es wurde zudem gefunden, dass der Aschegehalt und der Hitzeverlust, solange die Werte nicht zu hoch sind und somit den Wirkstoffgehalt zu stark reduzieren, nur einen geringen Einfluss besitzen.

Die hierin eingesetzten Füllstoffe, vorzugsweise die HTC-Lignine, besitzen - wie im experimentellen Teil der vorliegenden Anmeldung gezeigt wurde - das Potenzial Ruße in der Herstellung von Kautschukzusammensetzungen, insbesondere solchen zur Herstellung von Innerlinern komplett zu ersetzen. Das heißt, dass bevorzugte erfindungsgemäße Kautschukzusammensetzungen keine Ruße aus Materialien fossilen Ursprungs enthalten müssen.

Dies ermöglicht es unter anderem Innerliner für Luftreifen herzustellen, die bei gleichen Dimensionen vergleichbarer unter Verwendung von Rußen erhaltener Innerliner ein deutlich geringeres Gewicht, ein verbessertes Lufthaltevermögen und eine verbesserte Rissbeständigkeit aufweist. Gerade das bessere Lufthaltevermögen sorgt dafür, dass der Rollwiderstand des Reifens über lange Zeit auf dem Optimum ist aufweisen und daher einen ökonomischeren Betrieb des mit den Reifen ausgestatteten Fahrzeugs erlauben.

Es ist jedoch auch möglich, nur einen Teil der Ruße aus Materialien fossilen Ursprungs durch ein oder mehrere der erfindungsgemäß einsetzbaren Füllstoffe, vorzugsweise die HTC-Lignine, zu ersetzen. Wobei die Vorteile weiterhin, aber in geringerem Ausmaß, ausgeprägt sind.

### Weitere Bestandteile der Kautschukzusammensetzung

### Weitere Füllstoffe F2

Neben den vorgenannten erfindungsgemäß einzusetzenden Füllstoffen F1, vorzugsweise HTC-Ligninen F1, können die Kautschukzusammensetzungen weitere, von diesen verschiedene Füllstoffe F2 enthalten.

Für den Fall, dass die erfindungsgemäß einzusetzenden Füllstoffe F1, vorzugsweise die HTC-Lignine F1, nur als Teilersatz üblicher Industrieruße dienen, können die erfindungsgemäßen Kautschukzusammensetzungen auch Industrieruße, insbesondere Furnace-Ruße enthalten wie sie beispielsweise unter dem ASTM-Code N660 als Allzweckruße eingestuft sind.

Zu den möglichen Füllstoffen F2 zählen insbesondere anorganische Füllstoffe unterschiedlicher Teilchengröße, Teilchenoberfläche und chemischer Natur mit unterschiedlichem Potenzial das Vulkanisationsverhalten zu beeinflussen. Für den Fall, dass weitere Füllstoffe enthalten sind, sollten diese vorzugsweise möglichst ähnliche Eigenschaften besitzen wie die in der erfindungsgemäßen Kautschukzusammensetzung eingesetzten Füllstoffe F1, insbesondere HTC-Lignine, insbesondere in Bezug auf deren pH-Wert.

Werden weitere Füllstoffe F2 eingesetzt, so handelt es sich hierbei vorzugsweise um Schichtsilikate wie Tonminerale, beispielsweise Talk; Carbonate wie Calciumcarbonat; Silikate wie beispielsweise Calcium-, Magnesium- und Aluminiumsilikat; und Oxide wie beispielsweise Magnesiumoxid und Silica. Im Rahmen der vorliegenden Erfindung zählt Zinkoxid jedoch nicht zu den Füllstoffen, da Zinkoxid die Aufgabe eines Vulkanisators zukommt. Zusätzliche Füllstoffe sind jedoch mit Bedacht zu wählen, da sich beispielsweise höhere Mengen an Magnesiumoxid negativ auf die Haftung zu benachbarten Reifenschichten auswirken können und Silica dazu tendiert organische Moleküle wie beispielsweise die in manchen Vulkanisations-Systemen eingesetzten Thiazole an seine Oberfläche zu binden und damit deren Wirkung zu inhibieren.

Anorganische Füllstoffe, hierunter vorzugsweise Silica und andere Füllstoffe, die Si-OH-Gruppen an ihrer Oberfläche tragen, können auch oberflächenbehandelt sein. Insbesondere eine Silanisierung mit Organosilanen wie beispielsweise Alkylalkoxysilanen oder Aminoalkylalkoxysilanen oder Marcaptoalkylalkoxysilanen kann vorteilhaft sein. Die Alkoxysilangruppen können beispielsweise durch hydrolytische Kondensation an die Oberflächen von Silicaten oder Silica binden oder an andere geeignete Gruppen, während beispielsweise die Aminogruppen und Thiolgruppen mit den halogenierten, insbesondere bromierten Isopren-Einheiten der Halobutyl-Kautschuke reagieren können. Dies kann eine mechanische Verstärkung der vulkanisierten Kautschukzusammensetzungen der vorliegenden Erfindung bewirken.

Der Einsatz von silanisierten Füllstoffen kann zur Beschleunigung des Erreichens des Vulkanisationsendzustands führen und die Einreißfestigkeit erhöhen.

Die Füllstoffe können einzeln oder in Kombination miteinander eingesetzt werden.

Vorzugsweise werden neben den erfindungsgemäß eingesetzten Füllstoffen F1, insbesondere den HTC-Ligninen F1 keine weiteren Füllstoffe F2 eingesetzt. Werden weitere Füllstoffe F2 eingesetzt, so sind dies vorzugsweise Industrieruße wie insbesondere Furnace-Ruße. Unter den anderen Füllstoffen F2 sind jedoch insbesondere Schichtsilikate wie Tonminerale und beispielsweise Talk bevorzugt.

Im Falle, dass weitere Füllstoffe F2 eingesetzt werden, so beträgt deren Anteil vorzugsweise weniger als 40 phr, besonders bevorzugt 20 bis 40 phr und besonders bevorzugt 25 bis 35 phr.

### Weichmacher

Durch den Einsatz von Weichmachern lassen sich insbesondere Eigenschaften der unvulkanisierten Kautschukzusammensetzung wie die Verarbeitbarkeit, aber auch Eigenschaften der vulkanisierten Kautschukzusammensetzung wie deren Flexibilität, insbesondere bei niedrigen Temperaturen beeinflussen.

Besonders geeignete Weichmacher sind im Rahmen der vorliegenden Erfindung Mineralöle aus der Gruppe der paraffinischen Öle (im Wesentlichen gesättigte kettenförmige, Kohlenwasserstoffe) und naphthenische Öle (im Wesentlichen gesättigte ringförmige Kohlenwasserstoffe). Der Einsatz aromatischer Kohlenwasserstoff-Öle ist möglich, aber weniger vorteilhaft, da diese ein schlechteres Lösungsverhalten gegenüber Halobutyl-Kautschuken aufweisen. Vorteilhaft kann jedoch eine Mischung paraffinischer und/oder naphthenischer Öle mit aromatischen Ölen als Weichmacher in Bezug auf die Haftung der Kautschukzusammensetzung an andere kautschukenthaltende Komponenten in Reifen sein, wie beispielsweise die Karkasse.

Weitere Weichmacher sind beispielsweise Ester aliphatischer Dicarbonsäuren wie beispielsweise der Adipinsäure oder Sebacinsäure, Paraffinwachse und Polyethylenwachse.

Unter den Weichmachern sind im Rahmen der vorliegenden Erfindung besonders die paraffinischen Öle und naphthenischen Öle geeignet.

Vorzugsweise werden Weichmacher und ganz besonders bevorzugt hierunter die paraffinischen und/oder naphthenischen Öle in einer Menge von 0 bis 15 phr, vorzugsweise 5 bis 15 phr, besonders bevorzugt 7 bis 13 phr eingesetzt.

### Haftfähigkeit erhöhende Harze ("tackifying resins")

Zur Verbesserung der Haftfähigkeit der vulkanisierten Kautschukmischung der vorliegenden Erfindung an andere benachbarte Reifenbestandteile können sogenannte, die Haftfähigkeit erhöhende Harze eingesetzt werden.

Besonders geeignete Harze sind solche auf Phenolbasis vorzugsweise aus der Gruppe bestehend aus phenolischen Harzen, Phenol-Formaldehyd-Harzen und Phenol-Acetylen-Harzen.

Neben den Harzen auf Phenolbasis können auch aliphatische Kohlenwasserstoffharze wie beispielsweise Escorez^{™} 1102 RM der Firma ExxonMobil, aber auch aromatische Kohlenwasserstoffharze, eingesetzt werden. Aliphatische Kohlenwasserstoffharze verbessern insbesondere die Haftfähigkeit gegenüber anderen Kautschuk-Komponenten des Reifens. Sie besitzen in der Regel eine geringere Haftfähigkeit als die Harze auf Phenolbasis und können alleine oder in Mischung mit den Harzen auf Phenolbasis eingesetzt werden.

Werden die Haftfähigkeit erhöhende Harze eingesetzt, dann vorzugsweise solche, gewählt aus der Gruppe bestehend aus Harzen auf Phenolbasis, aromatischen Kohlenwasserstoffharzen und aliphatischen Kohlenwasserstoffharzen. Vorzugsweise beträgt deren Anteil 0 bis 15 phr bzw. 1 bis 15 phr, besonders bevorzugt 2 bis 10 phr und ganz besonders bevorzugt 3 bis 8 phr.

### Vulkanisationsfördernde Additive

Die erfindungsgemäße Kautschukzusammensetzung kann auch Additive enthalten, welche die Vulkanisation fördern, jedoch nicht selbständig auszulösen vermögen. Zu solchen Additiven zählen beispielsweise Vulkanisationsbeschleuniger wie gesättigten Fettsäuren mit 12 bis 24, vorzugsweise 14 bis 20 und besonders bevorzugt 16 bis 18 Kohlenstoffatomen wie beispielsweise Stearinsäure und die Zinksalze vorgenannter Fettsäuren. Auch Thiazole können zu diesen Additiven gehören. Es ist jedoch auch möglich, vulkanisationsfördernde Additive erst in den unten beschriebenen Vulkanisations-Systemen einzusetzen.

Werden vulkanisationsfördernde Additive und insbesondere vorgenannte Fettsäuren und/oder deren Zinksalze, vorzugsweise Stearinsäure und/oder Zinkstearat, in den erfindungsgemäßen Kautschukzusammensetzungen eingesetzt, so beträgt deren Anteil vorzugsweise 0 bis 5 phr, besonders bevorzugt 0,5 bis 3 phr und besonders bevorzugt 1 bis 2 phr.

Vorzugsweise enthält die erfindungsgemäße Kautschukzusammensetzung somit zusätzlich zu den zwingenden Bestandteilen einen oder mehrere Bestandteile gewählt aus der Gruppe bestehend aus
i. von den Halobutyl-Kautschuken verschiedenen Kautschuken,
ii. von den erfindungsgemäß einzusetzenden Füllstoffen F1 verschiedenen Füllstoffen F2,
iii. Weichmachern,
iv. die Haftfähigkeit erhöhenden Harzen, und
v. vulkanisationsfördernden Additiven.

Ist einer oder sind mehrere der unter vorstehenden Punkten i. bis v. genannten Bestandteile enthalten, so handelt es sich bei
i. vorzugsweise um einen Kautschuk gewählt aus der Gruppe bestehend aus Naturkautschuk, Butyl-Kautschuk und Styren-Butadien-Kautschuk,
ii. vorzugsweise um einen Füllstoff F2 gewählt aus der Gruppe der Ruße und der Schichtsilikate,
iii. vorzugsweise um einen Ester einer aliphatischen Dicarbonsäure, ein paraffinisches Öl und/oder ein naphthenisches Öl,
iv. um ein Harz gewählt aus der Gruppe der aliphatischen Kohlenwasserstoffharze, der aromatischen Kohlenwasserstoffharze, der phenolischen Harze, der Phenol-Formaldehyd-Harze und der Phenol-Acetylen-Harze; und bei
v. um ein Additiv gewählt aus der Gruppe der der gesättigten Fettsäuren mit 12 bis 24 Kohlenstoffatomen und der Thiazole.

Sind die Komponenten i. bis v. enthalten, so sind diese vorzugsweise in folgenden Mengen enthalten:
i. 0 bis 30 phr, besonders bevorzugt 0 bis 20 phr, ganz besonders bevorzugt 0 bis 10 phr oder 0 phr;
ii. 0 bis 40 phr, besonders bevorzugt 20 bis 40 phr, ganz besonders bevorzugt 25 bis 35 phr;
iii. 0 bis 15 phr, besonders bevorzugt 5 bis 15 phr, ganz besonders bevorzugt 7 bis 13 phr;
iv. 0 bis 15 phr besonders bevorzugt 2 bis 10 phr, ganz besonders bevorzugt 3 bis 8 phr; und
v. 0 bis 5 phr, besonders bevorzugt 0,5 bis 3 phr, ganz besonders bevorzugt 1 bis 2 phr.

Besonders bevorzugt sind als weitere Bestandteile von den unter i. bis v. genannten Bestandteilen nur die Bestandteile iii., iv. und v. oder iii. und v. enthalten, vorzugsweise in vorgenannten besonders bevorzugten und/oder ganz besonders bevorzugten Mengen.

### Vulkanisierbare Kautschukzusammensetzung

Die vulkanisierbaren Kautschukzusammensetzungen der vorliegenden Erfindung umfassen eine erfindungsgemäße Kautschukzusammensetzung und ein zu deren Vulkanisation dienendes Vulkanisations-System.

### Vulkanisations-Systeme

Die Vulkanisations-Systeme werden hierin nicht zu den erfindungsgemäßen Kauschukzusammensetzungen gezählt, sondern als zusätzliche, die Vernetzung bedingende Systeme behandelt. Durch die Zugabe der Vulkanisations-Systeme zu den erfindungsgemäßen Kautschukzusammensetzungen werden die ebenfalls erfindungsgemäßen *vulkanisierbaren* Kautschukzusammensetzungen erhalten.

Die auf Halobutyl-Kautschuken basierenden Kautschukzusammensetzungen der vorliegenden Erfindung erlauben die Verwendung einer breiten Vielfalt verschiedener Vulkanisations-Systeme. Die im Vergleich zu einer Kohlenstoff-Kohlenstoff-Bindung schwächere Chlor-Kohlenstoff-Bindung, aber insbesondere Brom-Kohlenstoff-Bindung erlaubt eine schnellere Vulkanisation sowie eine bessere Co-Vulkanisierung mit Allzweck-Kautschuken.

Die Vulkanisation der Kautschukzusammensetzungen der vorliegenden Erfindung erfolgt vorzugsweise unter Verwendung von Zinkoxid und/oder Schwefel.

In den im Folgenden beschriebenen bevorzugten Varianten wird Zinkoxid vorzugsweise in Kombination mit unterschiedlichen organischen Verbindungen zur Vulkanisation eingesetzt. Durch die unterschiedlichen Zusätze lassen sich das Vulkanisationsverhalten als auch die Eigenschaften der erhaltenen vulkanisierten Kautschuke beeinflussen.

In einer ersten Variante der auf Zinkoxid basierenden Vulkanisation werden dem Zinkoxid vorzugsweise geringe Mengen einer gesättigten Fettsäure mit 12 bis 24, vorzugsweise 14 bis 20 und besonders bevorzugt 16 bis 18 Kohlenstoffatomen, beispielsweise Stearinsäure und/oder Zinkstearat, als Vulkanisationsbeschleuniger zugegeben. Hierdurch lässt sich die Vulkanisationsrate steigern. Das finale Ausmaß der Vulkanisation ist bei der Verwendung der genannten Fettsäuren jedoch zumeist verringert.

In einer zweiten Variante der auf Zinkoxid basierenden Vulkanisation werden dem Zinkoxid, in Abwesenheit von Schwefel, sogenannte Thiurame wie Thiurammonosulfid und Thiuramdisulfid und/oder Dithiocarbamate zugegeben, um die Anvulkanisationszeit zu verkürzen und die Vulkanisationseffizient unter Ausbildung besonders stabiler Netzwerke zu verbessern.

In einer dritten Variante der auf Zinkoxid basierenden Vulkanisation wird dem Zinkoxid ein Alkylphenoldisulfid zugefügt, um die Anvulkanisationszeiten anzupassen, insbesondere zu beschleunigen.

Eine weitere, vierte Variante der auf Zinkoxid basierenden Vulkanisation setzt eine Kombination aus Zinkoxid mit Polymethylolphenolharzen und deren halogenierten Derivaten ein, in welcher weder Schwefel noch schwefelhaltige Verbindungen eingesetzt werden.

In einer weiteren, fünften Variante der auf Zinkoxid basierenden Vulkanisation erfolgt die Vulkanisation mittels einer Kombination aus Zinkoxid mit Thiazolen und/oder Sulfenamiden sowie vorzugsweise Schwefel. Die Thiazole und Sulfenamide werden vorzugsweise gewählt aus der Gruppe bestehend aus 2-Mercaptobenzothiazol (MBT), Mercaptobenzothiazyldisulfid (MBTS), N-Cyclohexyl-2-benzothiazyl-sulfenamid (CBS), 2-Morpholinothiobenzothiazol (MBS) und N-tert.-Butyl-2-benzothiazylsulfenamid (TBBS). Die Zugabe von Schwefel zu solchen Systemen erhöht sowohl die Vulkanisationsrate als auch das Ausmaß der Vulkanisation und trägt zur Verarbeitbarkeit der Kautschukzusammensetzungen während des Vulkanisationsvorgangs bei. Auch die Co-Vulkanisation mit von den Halobutyl-Kautschuken verschiedenen Kautschuken, insbesondere den obengenannten, wird begünstigt. Die Verwendung dieses Vulkanisations-Systems liefert vorzugsweise hitze- und ermüdungsbeständige Vulkanisate, die auch im vulkanisierten Zustand eine gute Haftung an andere Komponenten von Fahrzeugreifen, insbesondere Kautschukzusammensetzungen der Karkasse, aufweisen. Ein besonders vorteilhaftes Vulkanisations-System umfasst Zinkoxid, ein Thiazol wie vorzugsweise Mercaptobenzothiazyldisulfid (MBTS) sowie Schwefel. Besonders bevorzugt ist die Kombination der ersten Variante mit der fünften Variante, das heißt der Einsatz eines Vulkanisations-Systems umfassend umfasst Zinkoxid, ein Thiazol wie vorzugsweise Mercaptobenzothiazyldisulfid (MBTS), Schwefel sowie Stearinsäure und/oder gegebenenfalls Zinkstearat.

Weniger bevorzugte Vulkanisationssysteme basieren einer reinen Schwefel-Vulkanisation oder einer Peroxid-Vulkanisation, wobei letztere insbesondere bei der Mitverwendung von Butyl-Kautschuk oder anderen Kautschuken zu einer unerwünschten Herabsetzung der Molekulargewichte durch Spaltung der Moleküle führen kann.

In Rahmen der vorliegenden Erfindung erfolgt die Vulkanisation der erfindungsgemäßen Kautschukzusammensetzung in Gegenwart der spezifischen Füllstoffe F1, vorzugsweise der spezifischen HTC-Lignine. Die hervorragenden Eigenschaften der vulkanisierten erfindungsgemäßen Kautschukzusammensetzung, insbesondere deren Eignung als Innerliner basiert im Wesentlichen auf der Kombination der Kombination der geeigneten Kautschuk-Komponente mit den spezifischen Füllstoffen F1, insbesondere den bevorzugten HTC-Ligninen und einem Zinkoxid basierten Vulkanisations-System, vorzugsweise einem Vulkanisations-System der oben als fünfte Variante bezeichneten Variante, noch bevorzugter der Kombination der ersten mit der fünften Variante.

Komponenten der Vulkanisations-Systeme, die als solche keine Vulkanisation auslösen können, können auch als "weitere Bestandteile der Kautschukzusammensetzung" in der Kautschukzusammensetzung der vorliegenden Erfindung enthalten sein. So ist es möglich, dass insbesondere die Stearinsäure und/oder gegebenenfalls Zinkstearat und/oder die Thiazolverbindung bereits in der Kautschukzusammensetzung vorliegen und sich das vollständige Vulkanisations-System in situ durch Zugabe von Zinkoxid und Schwefel bildet.

### Kit-of-Parts

Aufgrund des Zusammenhangs zwischen den erfindungsgemäßen Kautschukzusammensetzungen und den für deren Vulkanisation auszuwählenden Vernetzungssystemen betrifft die vorliegende Erfindung auch ein Kit-of-Parts, umfassend die erfindungsgemäße Kautschukzusammensetzung und ein Vulkanisations-System, vorzugsweise ein auf Zinkoxid und/oder Schwefel basierendes Vulkanisationssystem. Im Kit-of-Parts sind die erfindungsgemäße Kautschukzusammensetzung und das Vulkanisations-System räumlich voneinander getrennt und können so gelagert werden. Das Kit-of-Parts dient der Herstellung der vulkanisierbaren Kautschukzusammensetzung. So kann beispielsweise die den einen Teil des Kit-Of-Parts ausmachende erfindungsgemäße Kautschukzusammensetzung als Part (A) in Stufe 1 des weiter unten beschriebenen Verfahrens zur Herstellung einer vulkanisierbaren Kautschukmischung eingesetzt werden und der zweite Teil des Kit-of-Parts, nämlich das Vulkanisations-System als Part (B) in Stufe 2 besagten Verfahrens.

Vorzugsweise umfasst das Kit-of-Parts als
Part (A) eine Kautschukzusammensetzung gemäß der vorliegenden Erfindung und als
Part (B) ein Vulkanisations-System umfassend Zinkoxid und/oder Schwefel.

Besonders bevorzugt umfasst das Kit-of-Parts als
Part (A) eine Kautschukzusammensetzung gemäß der vorliegenden Erfindung und als
Part (B) ein Vulkanisations-System umfassend Zinkoxid, Schwefel und ein Thiazol; oder als
Part (A) eine Kautschukzusammensetzung gemäß der vorliegenden Erfindung enthaltend ein Thiazol und als
Part (B) ein Vulkanisations-System umfassend Zinkoxid, Schwefel.

Ganz besonders bevorzugt umfasst das Kit-of-Parts als
Part (A) eine Kautschukzusammensetzung gemäß der vorliegenden Erfindung, und als
Part (B) ein Vulkanisations-System umfassend Zinkoxid, Schwefel, ein Thiazol und Stearinsäure und gegebenenfalls Zinkstearat; oder als
Part (A) eine Kautschukzusammensetzung gemäß der vorliegenden Erfindung enthaltend Stearinsäure und gegebenenfalls Zinkstearat, und als
Part (B) ein Vulkanisations-System umfassend Zinkoxid, Schwefel und ein Thiazol.

Bevorzugtes Thiazol in vorstehenden Kit-of-Parts ist MBTS.

Im Gegensatz zur vulkanisierbaren Kautschukzusammensetzung, die bereits sowohl die Bestandteile der erfindungsgemäßen Kautschukzusammensetzung als auch des zugehörigen Vulkanisations-Systems homogen vermischt enthält, so dass die vulkanisierbare Kautschukzusammensetzung direkt vulkanisiert werden, sind im Kit-of-Parts die erfindungsgemäße Kautschukzusammensetzung und das Vulkanisations-System räumlich getrennt.

Die aus dem Kit-of-Parts erhältliche vulkanisierbare Kautschukzusammensetzung wird hierin auch als "Green Compound" bezeichnet. Sie lässt sich durch das im folgenden Abschnitt beschriebene zweistufige Verfahren erhalten.

### Verfahren zur Herstellung der erfindungsgemäßen Kautschukzusammensetzung und einer vulkanisierbaren Kautschukzusammensetzung aus dieser

Die Herstellung der vulkanisierbaren Kautschukmischung erfolgt vorzugsweise zweistufig.

In der ersten Stufe wird zunächst die erfindungsgemäße Kautschukzusammensetzung als Grundmischung (Masterbatch) hergestellt, indem die Bestandteile der Kautschukzusammensetzung compoundiert werden. In der zweiten Stufe erfolgt die Zumischung der Bestandteile des Vulkanisation-Systems.

### Stufe 1

Vorzugsweise werden die Halobutyl-Kautschuke und die gegebenenfalls zusätzlich verwendeten Kautschuke, sowie gegebenenfalls die eventuell eingesetzten die Haftfähigkeit verbessernden Harze vorgelegt. Letztere können jedoch auch mit den weiteren Additiven zu gegeben werden. Vorzugsweise besitzen die Kautschuke mindestens Raumtemperatur (23 °C) oder werden vorgewärmt auf Temperaturen von maximal 50 °C, vorzugsweise maximal 45 °C und besonders bevorzugt maximal 40 °C eingesetzt. Besonders bevorzugt werden die Kautschuke für einen kurzen Zeitraum vorgeknetet, bevor die anderen Bestandteile zugegeben werden. Werden zur späteren Vulkanisationskontrolle Inhibitoren eingesetzt wie beispielsweise Magnesiumoxid, so werden diese vorzugsweise ebenfalls zu diesem Zeitpunkt zugegeben.

Anschließend werden die erfindungsgemäß einzusetzenden Füllstoffe F1, vorzugsweise als HTC-Lignine und gegebenenfalls weitere Füllstoffe zugegeben, vorzugsweise mit Ausnahme von Zinkoxid, da dieses in den erfindungsgemäßen Kautschukzusammensetzungen als Bestandteil des Vulkanisations-Systems zum Einsatz kommt und daher hierin nicht als Füllstoff betrachtet wird. Die Zugabe der erfindungsgemäß einzusetzenden Füllstoffe F1, vorzugsweise der HTC-Lignine und gegebenenfalls weiteren Füllstoffe erfolgt vorzugsweise inkrementell.

Vorteilhaft, jedoch nicht zwingend, werden Weichmacher und andere Bestandteile wie beispielsweise Stearinsäure und/oder Zinkstearat erst im Anschluss an die Zugabe der erfindungsgemäß einzusetzenden Füllstoffe F1, vorzugsweise HTC-Lignine beziehungsweise der weiteren Füllstoffe, sofern verwendet, zugeben. Hierdurch wird die Einarbeitung der erfindungsgemäß einzusetzenden Füllstoffe F1, vorzugsweise HTC-Lignine und sofern vorhanden der weiteren Füllstoffe erleichtert. Es kann jedoch von Vorteil sein, einen Teil der erfindungsgemäß einzusetzenden Füllstoffe F1, vorzugsweise HTC-Lignine oder sofern vorhanden der weiteren Füllstoffe zusammen mit den Weichmachern und den gegebenenfalls eingesetzten weiteren Bestandteilen einzuarbeiten.

Die höchsten, bei der Herstellung der Kautschukzusammensetzung in der ersten Stufe erhaltenen Temperaturen ("dump temperature"), sollten 140 °C nicht überschreiten, da oberhalb dieser Temperaturen eine teilweise Zersetzung der reaktiven Halobutyl-Kautschuke droht. Vorzugsweise beträgt die Höchsttemperatur bei der Herstellung der Kautschukzusammensetzung der ersten Stufe zwischen 100 °C und 130 °C, besonders bevorzugt zwischen 105 °C und 120 °C.

Die Mischung der Bestandteile der erfindungsgemäßen Kautschukzusammensetzung erfolgt üblicherweise mittels Innenmischern, die mit tangierenden oder kämmenden (das heißt ineinandergreifenden) Rotoren ausgestattet sind. Letztere erlauben in der Regel eine bessere Temperatursteuerung. Die Mischung kann jedoch beispielsweise auch unter Verwendung eines Doppelwalzenmischers erfolgen.

Nach erfolgter Herstellung der Kautschukzusammensetzung wird diese vorzugsweise vor Durchführung der zweiten Stufe abgekühlt. Ein derartiges Verfahren wird auch als Alterung bezeichnet. Typische Alterungszeiträume betragen 6 bis 24 Stunden, vorzugsweise 12 bis 24 Stunden.

### Stufe 2

In der zweiten Stufe werden in die Kautschukzusammensetzung der ersten Stufe die Bestandteile des Vulkanisations-Systems eingearbeitet, wodurch eine vulkanisierbare Kautschukzusammensetzung gemäß der vorliegenden Erfindung erhalten wird.

Wird als Vulkanisations-System ein Zinkoxid basiertes Vulkanisations-System eingesetzt, so erfolgt in Stufe 2 die Zugabe des Zinkoxids sowie der weiteren Bestandteile wie insbesondere des Schwefels und besonders bevorzugt des Thiazols.

Die höchsten, bei der Herstellung der Zumischung des Vulkanisations-Systems zur Kautschukzusammensetzung in der zweiten Stufe erhaltenen Temperaturen ("dump temperature"), sollten vorzugsweise 110 °C, besonders bevorzugt 105 °C nicht überschreiten. Ein bevorzugter Temperaturbereich beträgt zwischen 90 °C und 110 °C, besonders bevorzugt 95 °C und 105 °C. Bei Temperaturen oberhalb von 105 bis 110 °C kann es zu einer vorzeitigen Vulkanisation kommen.

Nach erfolgter Zumischung des Vulkanisations-Systems in Stufe 2 wird die Zusammensetzung vorzugsweise abgekühlt.

Im vorgenannten zweistufigen Erfahren wird somit zunächst in der ersten Stufe eine erfindungsgemäße Kautschukzusammensetzung erhalten die in der zweiten Stufe zur vulkanisierbaren Kautschukzusammensetzung, insbesondere zur vulkanisierbaren Innerliner-Kautschukzusammensetzung, ergänzt wird.

### Verfahren zur Weiterverarbeitung der erfindungsgemäßen vulkanisierbaren Kautschukzusammensetzung

Die im oben beschriebenen zweitstufen Verfahren erhaltenen vulkanisierbaren Kautschukzusammensetzungen werden vorzugsweise durch Kalandrieren, Extrudieren oder im Roller-Head-Verfahren weiterverarbeitet.

### Kalandrieren

Die Zuführung der vulkanisierbaren Kautschukzusammensetzung der vorliegenden Erfindung zum Kalander erfolgt vorzugsweise in einem ersten Schritt (a) beispielsweise unter Verwendung eines Vorwärmwalzwerks und einem nachgeschalteten Zuführwalzwerk oder aber im Extrusionsverfahren unter Verwendung eines Extruders. In beiden Fällen sollte die vulkanisierbare Kautschukzusammensetzung eine Temperatur von vorzugsweise 65 °C bis 85 °C, besonders bevorzugt von 70 °C bis 80 °C besitzen, bevor diese dem Kalander zugeführt wird.

Im zweiten Schritt (b) erfolgt das Kalandrieren, wobei verschiedene Walzenstellung der vorzugsweise drei oder vier Walzen des Kalanders möglich sind. Bevorzugt erfolgt das Kalandrieren mittels eines Vierwalzen-Z-Kalanders ("inclined Z-calender") oder eines Vierwalzen-L-Kalanders ("inverted L-calender"). Die kühleren Aufnahmewalzen besitzen hierbei vorzugsweise eine Temperatur von 75 °C bis 85 °C, während die wärmeren Walzen vorzugsweise eine Temperatur von 85 °C bis 95 °C besitzen.

Nach dem Kalandrieren verlässt in einem dritten Schritt (c) die kalandrierte vulkanisierbare Kautschukzusammensetzung den Kalander als kalandrierte Bahn und wird vor der Nachbearbeitung abgekühlt, vorzugsweise auf Temperaturen unterhalb 35 °C. Wenn die kalandrierten Bahnen den Kalander verlassen, können auch mehrere kalandrierte Bahnen mehrlagig konsolidiert werden. Dabei ist darauf zu achten, dass keine unerwünschten Lufteinschlüsse beim Konsolidierungsvorgang erfolgen.

Im Anschluss and die drei Schritte ist es vorteilhaft in einem vierten Schritt (d) die kalandrierten Bahnen oder die mehrlagig konsolidierten kalandrierten Bahnen für mindestens 3 Stunden, besser noch für mindestens 4 Stunden, vorzugsweise mindestens 12 bis 24 Stunden zu lagern. Die Lagerung dient der vollständigen Abkühlung der kalandrierten Bahnen und ermöglicht eine Spannungsrelaxation.

Das Kalandrieren erfolgt vorzugsweise mit Kalandrier-Geschwindigkeiten im Bereich von 20 bis 35 m/min, besonders bevorzugt 25 bis 30 m/min.

### Extrudieren

Neben dem Kalandrieren ist es auch möglich Innerliner durch Extrusion zu erhalten.

Die Zuführung der vulkanisierbaren Kautschukzusammensetzung der vorliegenden Erfindung zum Extruder erfolgt vorzugsweise in einem ersten Schritt (a) beispielsweise über einen Doppelwalzen-Mischer oder andere geeignete Zuführvorrichtungen. Hierbei sollte die vulkanisierbare Kautschukzusammensetzung eine Temperatur von vorzugsweise 65 °C bis 85 °C, besonders bevorzugt von 70 °C bis 80 °C besitzen, bevor diese dem Kalander zugeführt wird.

Im zweiten Schritt (b), der Extrusion können Temperaturen von 100 °C erreicht werden. Daher ist besonders darauf zu achten, dass keine Anvulkanisation erfolgt.

Nach dem Extrudieren verlässt in einem dritten Schritt (c) die extrudierte vulkanisierbare Kautschukzusammensetzung den Extruder als Bahn und wird vor der Nachbearbeitung abgekühlt, vorzugsweise auf Temperaturen unterhalb 35 °C. Wenn die Bahnen den Extruder verlassen, können auch mehrere Bahnen mehrlagig konsolidiert werden. Dabei ist darauf zu achten, dass keine unerwünschten Lufteinschlüsse beim Konsolidierungsvorgang erfolgen.

Im Anschluss and die drei Schritte ist es vorteilhaft in einem vierten Schritt (d) die Bahnen oder mehrlagig konsolidierten Bahnen für mindestens 3 Stunden, besser noch für mindestens 4 Stunden, vorzugsweise mindestens 12 bis 24 Stunden zu lagern. Die Lagerung dient der vollständigen Abkühlung der Bahnen und ermöglicht eine Spannungsrelaxation.

### Roller-Head- Verfahren

Im Gegensatz zum Kalandrieren mit mehreren Walzen, wie oben beschrieben, wird beim Roller-Head-Verfahren der Kalanderspalt eines Zwei- oder Dreiwalzen-Kalanders mit einer Kautschukmischung aus einem Extruder mit Breitspritzkopf beschickt. Der Extruder selbst kann warm oder kalt beschickt werden. Verwendbar ist beispielsweise ein kaltbeschickter Stiftextruder. Der Walzenspalt (Kalanderspalt) kann optimal beschickt werden, wenn die zugeführte Mischung in der Dicke und Breite der zu kalandrierenden Bahn angepasst wird, was durch die Wahl des Breitspritzkopfes und der an dessen Ende montierten auswechselbaren Spritzleisten erreicht wird.

Im Betriebsverhalten liegen Roller-Head-Anlagen zwischen Extrudern und Kalandern, wobei bei der Herstellung dickerer Bahnen der gleichmäßige Fluss in der Extruderdüse qualitäts- und dimensionsbestimmend ist, während bei dünneren Bahnen das Kalanderverhalten überwiegt.

Die Betriebstemperaturen liegen im Bereich des Kalandrierens und Extrudierens wie vorstehend zu diesen Verfahren beschrieben.

Wie auch bereits im Zusammenhang mit dem Kalandrieren beschrieben, müssen die fertigen Bahnen nach Verlassen des Kalanders gemäß obigem Schritt (c) abgekühlt werden, woran sich vorzugsweise der obige Schritt (d) anschließt.

Die kalandrierten, extrudierten oder über das Roller-Head-Verfahren erhaltenden vulkanisierbaren Bahnen besitzen vorzugsweise eine Schichtdicke von 0,3 bis 5 mm, besonders bevorzugt 0,4 bis 4 mm, ganz besonders bevorzugt 0,5 bis 3 mm. Diese Schichtdickenbereiche sind für Innerliner typisch.

### Vulkanisierte Kautschukzusammensetzungen

Weiterer Gegenstand der vorliegenden Erfindung sind vulkanisierte Kautschukzusammensetzungen, die aus den oben beschriebenen vulkanisierbaren Kautschukzusammensetzungen, beispielsweise auch unter Verwendung eines Kit-of-Parts, erhältlich sind.

Die Vulkanisationsbedingungen hängen vom eingesetzten Vulkanisationssystem ab. Geeignete Vulkanisationstemperaturen betragen vorzugsweise von 140 °C bis 200 °C, besonders bevorzugt 150 °C bis 180 °C.

Vorzugsweise handelt es sich bei der vulkanisierten Kautschukzusammensetzung um den Innerliner eines Luftreifens.

### Eigenschaften der vulkanisierten Kautschukzusammensetzung

Die aus den erfindungsgemäßen vulkanisierbaren Kautschukzusammensetzungen erhaltenen *vulkanisierten* Kautschukzusammensetzungen besitzen vorzugsweise
(a) eine Shore-A-Härte im Bereich von mehr als 50 bis weniger als 70, besonders bevorzugt von 52 bis 65 und ganz besonders bevorzugt von 54 bis 62; und/oder
(b) ein Modul 300 von 3,8 MPa bis 10 MPa, besonders bevorzugt von 4,5 MPa bis 9 MPa und ganz besonders bevorzugt von 5,5 MPa bis 8,5 MPa; und/oder
(c) eine Dichte von 0,950 g/cm³ bis 1,120 g/cm³, besonders bevorzugt von 0,980 g/cm³ bis 1,110 g/cm³ und ganz besonders bevorzugt von 1,050 g/cm³ bis 1.100 g/cm³; und/oder
(d) eine Gasdurchlässigkeit von weniger als 3,9 × 10⁻¹⁷ m²/Pas, besonders bevorzugt eine Gasdurchlässigkeit von 3,0 × 10⁻¹⁷ m²/Pas bis 3,8 × 10⁻¹⁷ m²/Pas und ganz besonders bevorzugt von 3,2 × 10⁻¹⁷ m²/Pas bis 3,7 × 10⁻¹⁷ m²/Pas wie beispielsweise 3,2 × 10⁻¹⁷ m²/Pas bis 3,5 × 10⁻¹⁷ m²/Pas.

Generell gilt, dass ein höherer Gehalt an erfindungsgemäß einsetzbaren Füllstoffen F1, insbesondere HTC-Ligninen und gegebenenfalls enthaltenen weiteren Füllstoffen die Gasdurchlässigkeit in der Regel weiter herabsetzt, dies jedoch zu Lasten der Reißfestigkeit und Reißdehnung der Mischung geht.

### Verfahren zur Herstellung eines Luftreifens, umfassend einen Innerliner aus der erfindungsgemäßen vulkanisierbaren Kautschukzusammensetzung

Die nach den vorstehenden Verfahren erhältlichen vulkanisierbaren Bahnen werden bis zur Verwendung vorzugsweise in Form von Rollen aufbewahrt und dienen bei der Herstellung von Luftreifen als Material für Innerliner. Hierfür müssen die Bahnen auf Trommelumfang zurechtgeschnitten werden, was unter Verwendung von Ultraschallmessern oder beheizbaren rotierenden Rundmessern, mit letzteren vorzugsweise im sogenannten Roll-on-and-Cut-Verfahren, möglich ist.

Die Innerliner werden typischerweise zusammen mit der Reifenkarkasse und/oder den anderen Reifenkomponenten unter Druck und/oder Hitzeeinwirkung vulkanisiert.

Geeignete Vulkanisationstemperaturen betragen vorzugsweise von 140 °C bis 200 °C, besonders bevorzugt 150 °C bis 180 °C.

Das Verfahren kann beispielsweise so durchgeführt werden, dass durch Schließen der Presse der Reifenrohling in die sich schließende Form eingeformt wird. Dazu kann ein Innenbalg (Heizbalg) mit einem kleinen Druck beaufschlagt (< 0,2 bar) werden, damit sich auch der Balg in den Reifenrohling einfügt. Danach wird die Presse und damit auch die Form komplett geschlossen. Der Druck im Balg wird erhöht (Bombierdruck, üblicherweise ca. 1,8 bar). Dadurch wird das Profil in die Lauffläche eingeprägt ebenso wie die Seitenwandbeschriftung. Im nächsten Arbeitsschritt wird die Presse verriegelt und die Schließkraft aufgebracht. Die Schließkraft variiert je nach Pressentyp und Reifengröße und kann mittels Hydraulikzylindern bis zu 2500 kN betragen. Nachdem die Schließkräfte aufgebracht sind, startet der eigentliche Vulkanisationsvorgang. Dabei wird die Form von außen kontinuierlich mit Dampf beheizt. Dabei werden hier Temperaturen in der Regel zwischen 150 und 180 °C eingestellt. Beim Innenmedium gibt es je nach Reifentyp sehr unterschiedliche Ausführungsvarianten. Es wird im Inneren des Heizbalgs beispielsweise Dampf oder Heißwasser verwendet. Die Innendrücke können dabei variieren und unterscheiden sich nach Reifentypen wie PKW- oder LKW-Reifen.

Alle in der vorliegenden Beschreibung im Zusammenhang mit der vorliegenden Erfindung genannten Messgrößen werden entsprechend der im experimentellen Teil genannten Verfahren bestimmt.

### Verwendung der erfindungsgemäß einzusetzenden Füllstoffe F1, insbesondere der HTC-Lignine

Weiterer Gegenstand der vorliegenden Anmeldung ist die Verwendung der wie oben im Zusammenhang mit der erfindungsgemäßen Kautschukzusammensetzung definierten Füllstoffe F1, vorzugsweise der HTC-Lignine als Füllstoff zur Herstellung von Kautschukzusammensetzungen für Innerliner, insbesondere Innerliner für Luftreifen, insbesondere Innerliner für Luftreifen für Fahrzeuge.

Im Folgenden wird die Erfindung anhand von Beispielen exemplifiziert.

### BEISPIELE

Die Bestandteile der Kautschukzusammensetzung, die nicht-vulkanisierte Kautschukzusammensetzung sowie die vulkanisierte Kautschukzusammensetzung wurden verschieden Testverfahren unterzogen, die im Folgenden näher beschrieben werden.

### Charakterisierung der Füllstoffe (HTC-Lignine bzw. Ruße)

### Massenbezogene Oberfläche (BET-Oberfläche und STSA-Oberfläche)

Die spezifische Oberfläche des HTC-Lignins wurde gemäß der für Industrieruße (Carbon Black) vorgesehenen Norm ASTM D 6556 (2019-01-01) durch Stickstoffadsorption bestimmt. Nach dieser Norm wurde die BET-Oberfläche (spezifische Gesamtoberfläche nach Brunauer, Emmett und Teller) sowie die externe Oberfläche (STSA-Oberfläche; Statistical Thickness Surface Area) wie folgt bestimmt.

Die zu analysierende Probe wurde vor der Messung auf einen Trockensubstanz-Gehalt ≥ 97,5 Gew.-% bei 105 °C getrocknet. Zudem wurde die Messzelle vor Einwiegen der Probe für mehrere Stunden im Trockenofen bei 105 °C getrocknet. Die Probe wurde anschließend unter Verwendung eines Trichters in die Messzelle eingefüllt. Bei Verunreinigung des oberen Messzellenschafts während des Befüllens wurde dieser mittels einer geeigneten Bürste oder einem Pfeifenreiniger gesäubert. Bei stark fliegendem (elektrostatischem) Material wurde zusätzlich zur Probe Glaswolle eingewogen. Die Glaswolle diente dazu, während des Ausheizvorganges eventuell auffliegendes Material, welches das Gerät verschmutzen könnte, zurückzuhalten.

Die zu analysierende Probe wurde bei 150 °C für 2 Stunden ausgeheizt, der Al₂O₃-Standard bei 350 °C für 1 Stunde.

Für die Bestimmung wurde in Abhängigkeit vom Druckbereich folgende N₂-Dosierung verwendet:
p/p0 = 0 - 0,01: N₂-Dosierung: 5ml/g
p/p0 = 0,01 - 0,5: N₂-Dosierung: 4ml/g

Zur Bestimmung der BET wurde im Bereich von p/p0 = 0,05 - 0,3 mit mind. 6 Messpunkten extrapoliert. Zur Bestimmung der STSA wurde im Bereich der Schichtdicke des adsorbierten N₂ von t = 0,4 - 0,63 nm (entspricht p/p0 = 0,2 - 0,5) mit mind. 7 Messpunkten extrapoliert.

### Bestimmung des Aschegehalts

Der wasserfreie Aschegehalt der Proben wurde gemäß der Norm DIN 51719 durch thermogravimetrische Analyse wie folgt bestimmt. Vor dem Einwiegen wurde die Probe gemahlen oder gemörsert. Vor der Aschebestimmung wird der Trockensubstanz-Gehalt des eingewogenen Materials ermittelt. Das Probenmaterial wurde auf 0,1 mg genau in einem Tiegel eingewogen. Der Ofen wurde samt Probe mit einer Aufheizrate von 9 ° K/min auf eine Zieltemperatur von 815 °C aufgeheizt und anschließend für 2 h bei dieser Temperatur gehalten. Anschließend wurde der Ofen auf 300 °C abgekühlt bevor die Proben entnommen wurden. Die Proben wurden im Exsikkator bis auf Umgebungstemperatur abgekühlt und erneut gewogen. Die verbliebene Asche wurde in Bezug zur Einwaage gesetzt und so der gewichtsprozentuale Gehalt an Asche bestimmt. Für jede Probe wurde eine Dreifachbestimmung durchgeführt und der gemittelte Wert angegeben.

### Bestimmung des pH-Werts

Die Bestimmung des pH-Wertes erfolgte in Anlehnung an die Norm ASTM D 1512 wie folgt. Die trockene Probe wurde, soweit nicht schon als Pulver vorliegend, zu einem Pulver gemörsert bzw. gemahlen. Jeweils 5 g Probe und 50 g vollentionisiertes Wasser wurden in einem Becherglas eingewogen. Die Suspension wurde unter ständigem Rühren mittels eines Magnetrührers mit Heizfunktion und Rührfisch auf eine Temperatur von 60°C erhitzt und die Temperatur für 30 min bei 60 °C gehalten. Anschließend wurde die Heizfunktion des Rührers deaktiviert, so dass der Ansatz unter Rühren abkühlen konnte. Nach dem Abkühlen wurde das verdunstete Wasser durch erneute Zugabe von vollentionisiertem Wasser aufgefüllt und erneut für 5 min gerührt. Mit einem geeichten Messgerät wurde der pH-Wert der Suspension ermittelt. Die Temperatur der Suspension sollte 23°C (± 0,5 °C) betragen. Für jede Probe wurde eine Doppelbestimmung durchgeführt und der gemittelte Wert angegeben.

### Bestimmung des Hitzeverlusts

Der Hitzeverlust der Probe wurde in Anlehnung an ASTM D 1509 wie folgt bestimmt. Hierzu wurde die Feuchtewaage MA100 der Fa. Sartorius auf eine Trockentemperatur von 125 °C geheizt. Die trockene Probe, soweit nicht schon als Pulver vorliegend, wurde zu einem Pulver gemörsert bzw. gemahlen. Ca. 2 g der zu messenden Probe wurden auf einer passenden Aluminiumschale in der Feuchtewaage eingewogen und anschließend wurde die Messung gestartet. Sobald sich das Gewicht der Probe für 30 s nicht mehr als 1 mg änderte, galt dies Gewicht als konstant und die Messung wurde beendet. Der Heizverlust entspricht dann dem angezeigten Feuchtegehalt der Probe in Gew.-%. Für jede Probe wurde mindestens eine Doppelbestimmung durchgeführt. Die gewichteten Mittelwerte wurden angegeben.

### Bestimmung der Schüttdichte

Die Schüttdichte der Probe wurde in Anlehnung an ISO 697 wie folgt bestimmt. Ein Standard-Becher gemäß DIN ISO 60 (Volumen 100 ml) zur Schüttdichtebestimmung wurde in einer Schale, die den Überlauf auffängt, platziert. Mit Trichter und Schaufel wurde der Becher bis zum Überlaufen befüllt. Mit einer geraden Kante der Schaufel wurde der Überstand am Becherrand abgezogen. Der Becher wurde außen mit einem trockenen Tuch abgewischt und mit einer Genauigkeit von 0,1 g gewogen.

### Bestimmung der oberflächenverfügbaren sauren Hydroxylgruppen (OH-Gruppen-Dichte)

Eine Bestimmung der oberflächenverfügbaren, sauren Hydroxylgruppen erfolgte qualitativ und quantitativ kolorimetrisch gemäß Sipponen. Das Verfahren nach Sipponen beruht auf der Adsorption des basischen Farbstoffs Azure B an die an der Füllstoffoberfläche zugänglichen sauren Hydroxylgruppen und wird im Detail im Artikel "Determination of surface-accessible acidic hydroxyls and surface area of lignin by cation dye adsorption" (Bioresource Technology 169 (2014) 80-87) beschrieben. Die Menge der oberflächenverfügbaren sauren Hydroxylgruppen wird in mmol/g Füllstoff angegeben. Unabhängig von der Gewinnung des Füllstoffs wurde das Verfahren nicht nur auf ligninbasierte Füllstoffe, sondern beispielsweise auch auf den Vergleichsruß N660 angewandt.

### Bestimmung des ¹⁴C-Gehalts

Die Bestimmung des ¹⁴C-Gehalts (Gehalt an biobasiertem Kohlenstoff) kann mittels der Radiokarbonmethode gemäß DIN EN 16640:2017-08 erfolgen.

### Bestimmung des Kohlenstoffgehalts

Der Kohlenstoffgehalt lässt sich lässt sich durch Elementaranalyse gemäß DIN 51732: 2014-7 bestimmen.

### Bestimmung des Sauerstoffgehalts

Der Sauerstoffgehalt lässt sich durch Hochtemperaturpyrolyse mit Hilfe des EuroEA3000 CHNS-O Analyzers der Firma EuroVector S.p.A. ermitteln.

### Charakterisierung der vulkanisierbaren Kautschukzusammensetzungen ("Green Compounds")

### Ermittlung der Reaktionskinetik/Vulkanisationskinetik

Die Reaktionskinetik nicht-vulkanisierter Kautschukzusammensetzungen ("green compounds") wurde mittels eines Rheometers MDR 3000 Professional (MonTech Werkstoffprüfmaschinen GmbH, Buchen, Deutschland) durch Bestimmung des zeitlichen Verlaufs des Drehmoments [dNm] gemäß DIN 53529 TI 3 (Torsionsschub-Vulkameter ohne Rotor. Die obere und untere Rotorplatte des Rheometers wurde auf 160 °C aufgeheizt. 5,5 g ± 0,5 g der nicht-vulkanisierten Kautschukzusammensetzungen wurden aus der Mitte des Fells mit einer Schere herausgeschnitten. Dabei wurde darauf geachtet, dass der Ausschnitt eine quadratische Fläche darstellte und die Diagonale dieser Fläche dem Durchmesser des Rotors des Rheometers entsprach. Vor dem Einlegen der nicht-vulkanisierten Kautschukzusammensetzung auf den Rotor des Rheometers wurde die Ober- und Unterseite des Ausschnittes mit einer Folie abgedeckt. Unmittelbar nach Einlegen der nicht-vulkanisierten Probe wurde die Messung gestartet.

Aus den Messkurven wurden das minimale und maximale Drehmoment (M_{L}, M_{H}) innerhalb einer 30-minütigen Testphase bei 160 °C (0,5° arc, 1,67 Hz) bestimmt und hieraus die Differenz Δ (M_{H}-M_{L}) errechnet.

Des Weiteren wurde für jede der Messkurven das minimale Drehmoment M_{L} als 0 % des maximalen Drehmoments M_{H} definiert und das maximale Drehmoment M_{H} als 100 % normiert. Anschließend wurden die Zeiträume bestimmt, in welchen das Drehmoment, ausgehend vom Zeitpunkt des minimalen Drehmoments M_{L} 2 %, 10 %, 50 % bzw. 90 % des maximalen Drehmoments M_{H} erreicht. Die Zeiträume wurden als T₂, T₁₀, T₅₀ und T₉₀ bezeichnet.

### Charakterisierung der vulkanisierten Kautschukzusammensetzungen

### Bestimmung der Shore-A-Härte

Die Bestimmung der Shore-A-Härte von vulkanisierten Kautschukzusammensetzungen erfolgte mit einem digitalen Shore-Härteprüfer der Fa. Sauter GmbH gemäß ISO 7619-1. Vor jeder Messung wurde das Gerät mit der beiliegenden Kalibrierplatte kalibriert. Für die Messung der Härte wurden drei Stäbe S2, die für die Durchführung der Zugprüfung nach DIN 53504 ausgestanzt wurden, übereinandergelegt. Die Härtemessung erfolgte an fünf unterschiedlichen Stellen des Stapels. Die Shore-A-Härte von vulkanisierten Kautschukzusammensetzungen stellt den Mittelwert der fünf Messungen dar. Zwischen Vulkanisation und Prüfung wurde die Probe für mindestens 16 h bei Raumtemperatur im Labor gelagert.

### Bestimmung der Dichte der vulkanisierten Kautschukzusammensetzung

Die Dichte der vulkanisierten Kautschukzusammensetzungen wurde gemäß DIN EN ISO 1183-1: 2018-04 (Verfahrens zu Bestimmung der Dichte von nicht verschäumten Kunststoffen) Verfahren A (Eintauchverfahren) durchgeführt. Als Eintauchmedium wurde Ethanol verwendet. Die Dichte der vulkanisierten Kautschukzusammensetzung stellt den Mittelwert einer Dreifachbestimmung dar. Zwischen Vulkanisation und Prüfung wurde die Probe für mindestens 16 h bei Raumtemperatur im Labor gelagert.

### Bestimmung der Gasdurchlässigkeit

Die Bestimmung der Gasdurchlässigkeit der vulkanisierten Kautschukzusammensetzung für Luft wurde gemäß ISO 15105 durchgeführt. Die Messungen wurden bei 70 °C durchgeführt. Gasdurchlässigkeit stellt den Mittelwert aus drei Messungen dar. Zwischen Vulkanisation und Prüfung wurde die Probe für mindestens 16 h bei Raumtemperatur im Labor gelagert.

### Bestimmung der Reißfestigkeit, der Reißdehnung und der Spannungswerte (Moduli)

Die Zugprüfung dient zur Ermittlung der Reißfestigkeit, der Reißdehnung und der Spannungswerte an nicht vorbelasteten Proben. Bei der Zugprüfung werden die Probekörper unter konstanter Dehngeschwindigkeit bis zum Riss gedehnt und die dafür nötige Kraft und Längenänderung aufgezeichnet.

Reißfestigkeit: Die Reißfestigkeit σR ist der Quotient aus der im Augenblick des Reißens gemessenen Kraft FR und dem Anfangsquerschnitt A0 des Probekörpers.

Zugfestigkeit: Die Zugfestigkeit σmax ist der Quotient aus der gemessenen Höchstkraft Fmax und dem Anfangsquerschnitt A0 des Probekörpers. Bei Elastomeren ist die beim Reißen auftretende Kra FR im Allgemeinen auch die Höchstkraft Fmax.

Reißdehnung: Die Reißdehnung εR ist der Quotient aus der im Augenblick des Reißens gemessenen Längenänderung LR-L0 und der ursprünglichen Messlänge L0 des Probekörpers. Sie wird in Prozent angegeben. Bei den verwendeten Stabprobekörpern ist L0 der festgelegte Abstand zwischen zwei Messmarken.

Spannungswert: Der Spannungswert σi ist die bei Erreichen einer bestimmten Dehnung vorhandene Zugkraft Fi bezogen auf den Anfangsquerschnitt A0. Bei Stabprobekörpern wird die Dehnung auf die ursprüngliche Messlänge L0, d. h. den festgelegten Abstand zwischen den Messmarken, bezogen.

Die Bestimmung der Zugfestigkeit, Bruchdehnung und Spannungswerte der vulkanisierten Kautschukzusammensetzung erfolgte mit einer Prüfinstrument vom Typ Tensor Check der Firma Gibitre Instruments gemäß ISO 37. Zwischen Vulkanisation und Prüfung wurde die Probe für mindestens 16 h bei Raumtemperatur im Labor gelagert. Für die Ermittlung des Modulus wurden mindestens fünf Hantelprüfkörper aus der vulkanisierten Kautschukzusammensetzung mit denen in ISO 37 aufgeführten Probenabmessungen (Stab Typ S2) ausgestanzt. Die Bestimmung der Dicke des Probenkörpers erfolgte mit einem kalibrierten Dickenmeßgerät der Firma Käfer Messuhren und stellt den Mittelwert aus drei Messungen an unterschiedlichen Positionen des Steges dar. Die Traversengeschwindigkeit während der Zugprüfung betrug 200 mm/min. Die angegebenen Messwerte für Zugfestigkeit, Bruchdehnung und Spannungswerte (Moduli 100, 200, 300) sind Mittelwerte aus fünf Messungen.

### Herstellungsbeispiele

### Herstellung der erfindungsgemäß einsetzbaren HTC-Lignine

Es wurden zwei HTC-Lignine mit unterschiedlichen Eigenschaften, insbesondere unterschiedlichen BET-, STSA-Oberflächen und OH-Gruppen-Dichten hergestellt. Die HTC-Lignine A und B wurden analog den in der WO 2017/085278 beschriebenen HCT-Ligninen hergestellt.

Die beiden HTC-Lignine A und B konnten wie in **Tabelle 1** angegeben charakterisiert werden. Die Ergebnisse der Charakterisierung wurden mit dem käuflich erhältlichen und nach ASTM genormten Industrieruß des Typs N660 (erhältlich von der Firma Lehmann und Voss) verglichen.

**Tabelle 1**

| **Test** | **Einheit** | **HTC-Lignin A** | **HTC-Lignin B** | **Ruß N660** |
|---|---|---|---|---|
| STSA | m²/g | 22 | 40 | 35 |
| BET | m²/g | 23 | 39 | 34 |
| Aschegehalt | Gew.-% | 3,8 | 3,1 | 0,30 |
| pH-Wert | ./. | 8,1 | 7,9 | 9,1 |
| Hitzeverlust | Gew.-% | 1,5 | 2,4 | 0,7 |
| Dichte | g/cm³ | 1,35 | 1,35 | 1,82 |
| ¹⁴C-Gehalt | Bq/g C | 0,244 | 0,243 | ≤ 0,05 |
| Kohlenstoffgehalt | Gew.-% | 71 | 71 | > 98 |
| Sauerstoffgehalt | Gew.-% | 22 | 22 | < 0,5 |
| OH-Gruppen-Dichte¹ | mmol/g | 0,3 | 0,34 | 0 |

| | | | | |
|---|---|---|---|---|
| ¹ = oberflächenverfügbare saure Hydroxylgruppen | | | | |

### Herstellung verschiedener Kautschukzusammensetzungen (Stufe 1)

In einem Mischer der Marke Haake Rheomix 3000 S, ausgestattet mit Banburyrotoren, der Firma ThermoFischer wurden Kautschukzusammensetzungen (Grundmischungen; Masterbatches) mit den in **Tabelle 2** angegebenen Bestandteilen und Mengen wie folgt hergestellt.

Vor dem Mischbeginn wurde die Mischkammer auf 40 °C geheizt. Die Mengen der Bestandteile wurden jeweils auf einen Füllgrad der Mischkammer von 70 % berechnet. Alle Bestandteile wurden auf einer Waage der Firma Kern vorgewogen. Nach Start der Rotoren (50 Upm) wurde die Mischkammer mit Kautschuk beschickt, die Einfüllvorrichtung zur Mischkammer pneumatisch verriegelt und bis zu einer Gesamtmischzeit von 1 Minuten gemischt. Daraufhin wurde die Einfüllvorrichtung der Mischkammer geöffnet, 1/3 der Füllstoffmenge hinzudosiert, die Mischkammer wieder verschlossen und bis zu einer Gesamtmischzeit von 2 Minuten gemischt. Daraufhin wurde die Einfüllvorrichtung der Mischkammer geöffnet, 1/6 der Füllstoffmenge, gefolgt von ½ der Ölmenge, gefolgt von 1/6 der Füllstoffmenge hinzudosiert, die Mischkammer wieder verschlossen und bis zu einer Gesamtmischzeit von 4 Minuten gemischt. Daraufhin wurde die Einfüllvorrichtung der Mischkammer geöffnet, 1/6 der Füllstoffmenge, gefolgt von ½ der Ölmenge, gefolgt von 1/6 der Füllstoffmenge und Additiven hinzudosiert, die Mischkammer wieder verschlossen und bis zu einer Gesamtmischzeit von 6 Minuten gemischt. Nach 6 und 8 Minuten Gesamtmischzeit wurde jeweils gelüftet. Durch Regulierung der Drehzahl wurde die Auswurftemperatur angesteuert. Nach 10 Minuten Gesamtmischzeit wurde ausgeworfen und die Temperatur der Mischung gemessen.

Nach dem Mischvorgang wurde die Mischung aus dem Mischer entfernt und auf einem Laborwalzwerk bei mittlerer Walzenspaltbreite gekühlt und homogenisiert. Dafür wurde die Mischung zunächst einmal durch den Walzenspalt geführt, das entstandene Mischungsfell zu einer "Puppe" gerollt und sechs Mal über Kopf durch den Walzenspalt gestürzt. Anschließend wurde das Fell auf dem Kühltisch zum Kühlen abgelegt bis das Fell Raumtemperatur angenommen hatte.

**Tabelle 2**

| **Bestandteile** | **Beispiele [Mengen in phr]** | | | | |
|---|---|---|---|---|---|
| | **V1** | **B1** | **B2** | **B3** | **B4** |
| BIIR 2230¹ | 100 | 100 | 100 | 100 | 100 |
| Ruß N660² | 70 | - | - | - | - |
| HTC-Lignin A | - | 54 | 70 | - | - |
| HTC-Lignin B | - | - | - | 54 | 70 |
| Paraffinöl³ | 10 | 10 | 10 | 10 | 10 |
| Stearinsäure | 1,5 | 1,5 | 1,5 | 1,5 | 1,5 |
| **Gesamtmenge** | 181,5 | 165,5 | 181,5 | 165,5 | 181,5 |
| **Tₘₐₓ⁴[in°C]** | 109 | 104 | 112 | 107 | 117 |

| | | | | | |
|---|---|---|---|---|---|
| ¹ Bromobutyl-Kautschuk X Butyl BB 2230 der Firma Arlanxeo ² Ruß N660 der Lehmann und Voss ³ Paraffinöl der Firma Hansen und Rosenthal ⁴ höchste Temperatur, die bei der Mischung erreicht wurde ("dumping temperature") | | | | | |

Das Vergleichsbeispiel V1 unterscheidet sich von den erfindungsgemäßen Beispielen B1 bis B4 dadurch, dass in diesem Beispiel der Industrieruß N660 eingesetzt wurde. In den erfindungsgemäßen Beispielen B1 und B3 wurden volumengleiche Mengen der HTC-Lignine in Bezug auf den Ruß N660 eingesetzt. In den Beispielen B2 und B4 wurden gewichtsgleiche Mengen der HTC-Lignine in Bezug auf den Ruß N660 eingesetzt.

### Herstellung vulkanisierbarer Kautschukzusammensetzungen (Stufe 2)

Die Herstellung der vulkanisierbaren "Green Compounds den erfindungsgemäßen Beispielen B1 bis B4 erfolgte für jede der Kautschukzusammensetzungen durch die Zumischung eines Vulkanisations-Systems bestehend aus 5 phr Zinkoxid, 1,5 phr Schwefel und 1,25 phr (Mercaptobenzothiazyldisulfid (MBTS) (phr = Gewichtsteile bezogen auf 100 Gewichtsteile der Kautschukmasse). Bei Vergleichsbeispiel V1 wurde das Zinkoxid bereits in Stufe 1 zugegeben.

Zunächst wurde das abgekühlte Mischungsfell in Streifen geschnitten und es wurden die Vulkanisationschemikalien abgewogen. Nach Start der Rotoren (50 Upm) bei 40 °C Mischkammertemperatur wurde das Fell der Mischkammer zugeführt, die Einfüllvorrichtung zur Mischkammer pneumatisch verriegelt und bis zu einer Gesamtmischzeit von 2 Minuten gemischt. Anschließend wurde die Einfüllvorrichtung zur Mischkammer geöffnet, Vulkanisationschemikalien wurden hinzudosiert, die Einfüllvorrichtung zur Mischkammer pneumatisch verriegelt und es wurde bis zu einer Gesamtmischzeit von 5 Minuten gemischt. Durch Regulierung der Drehzahl wurde die Auswurftemperatur angesteuert. Nach 5 Minuten Gesamtmischzeit wurde ausgeworfen und die Temperatur der Mischung gemessen.

Nach dem Mischvorgang wurde die Mischung aus dem Mischer entfernt und auf einem Laborwalzwerk bei mittlerer Walzenspaltbreite gekühlt und homogenisiert. Dafür wurde die Mischung zunächst einmal durch den Walzenspalt geführt, das entstandene Mischungsfell zu einer "Puppe" gerollt und sechs Mal über Kopf durch den Walzenspalt gestürzt. Anschließend wurde das Fell auf dem Kühltisch zum Kühlen abgelegt bis das Fell Raumtemperatur angenommen hatte.

Hieraus resultierten die *vulkanisierbaren* Kautschukzusammensetzungen V1_{g} und B1_{g} bis B4_{g}, worin "g" für "Green Compound" steht und restliche Bezeichnung zu den Beispielen V1 und B1 bis B4 korrespondiert.

### Herstellung der vulkaniserten Kautschukzusammensetzungen

Aus den vulkanisierbaren Kautschukzusammensetzungen V1_{g} und B1_{g} bis B4_{g} wurden durch Vulkanisation bei 160 °C in Vulkanisierpressen ausvulkanisierte Prüfkörper V1ᵥ und B1ᵥ bis B4ᵥ, korrespondierend zu den vulkanisierbaren Green Compounds V1_{g} und B1_{g} bis B4_{g}, erhalten. Das Mischungsfell wurde durch sukzessive Verringerung der Spaltbreite der Laborwalze auf ein Dicke von 3 mm faltenfrei ausgerollt. Aus diesem Fell wurde dann ein Quadrat mit den Abmessungen von 250x250 mm mit einer Schere geschnitten und in die Presse (Gibitre Instruments S.R.L. Vulkanisationspresse mit eingebauter Form für Prüfplatten Dicke 2 mm) überführt. Die einzustellende Vulkanisationszeit ergibt sich aus der t90-Zeit, die im Rheometertest ermittelt wurde, zuzüglich einer Minute pro Millimeter Plattendicke (also plus zwei bei Verwendung des 2 mm Rahmens). Die vulkanisierte Gummiplatte wurde nach Ablauf der Presszeit sofort entnommen. Die Platte wurde zum Kühlen auf dem Kühltisch abgelegt. Nach dem Abkühlen wurde der überstehende Rand mit einer Schere sorgfältig abgeschnitten.

### Testergebnisse

In **Tabelle 3** werden die Testergebnisse zur Reaktionskinetik/Vulkanisationskinetik der vulkanisierbaren Kautschukzusammensetzungen V1_{g} und B1_{g} bis B4_{g} wiedergeben.

**Tabelle 3**

| **Messgröße** | **Einheit** | **V1_{g}** | **B1_{g}** | **B2_{g}** | **B3_{g}** | **B4_{g}** |
|---|---|---|---|---|---|---|
| M_{L} | dNm | 2,0 | 1,7 | 2,2 | 2,0 | 2,7 |
| M_{H} | dNm | 9,8 | 7,1 | 9,9 | 8,6 | 11,3 |
| Δ(M_{H}-M_{L}) | dNm | 7,8 | 5,5 | 7,7 | 6,6 | 8,6 |
| T₂ | min | 0,8 | 1,1 | 1,1 | 1,1 | 1,1 |
| T₁₀ | min | 2,00 | 3,26 | 2,95 | 2,68 | 2,49 |
| T₅₀ | min | 4,11 | 12,35 | 11,30 | 12,0 | 12,2 |
| T₉₀ | min | 14,3 | 24,1 | 23,0 | 25,1 | 25,4 |

Wie **Tabelle 3** entnommen werden kann, ist die Anvulkanisation bei den Mischungen B1_{g} bis B4_{g} verzögert was zu einer verbesserten Verarbeitbarkeit führt. Die Ausvulkanisation ist deutlich verlängert. Dies ist bei der Anwendung im Innerliner kein Nachteil, da dieses Bauteil direkt mit der Temperatur, die vom Heizbalg abgegeben wird im Kontakt ist und die Ausvulkanisation gegeben ist. Es besteht aber die Möglichkeit die Reaktionskinetik über die Verwendung von Zinkstearat (1 bis 2 phr) entsprechend schneller einzustellen. Dabei muss jedoch die Zinkoxiddosierung angepasst werden.

**Tabelle 4** zeigt die an den vulkanisierten Prüfkörpern erhaltenen Messwerte.

**Tabelle 4**

| **Messgröße** | **Einheit** | **V1ᵥ** | **B1ᵥ** | **B2ᵥ** | **B3ᵥ** | **B4ᵥ** |
|---|---|---|---|---|---|---|
| Shore-A-Härte | | 61 | 54 | 55 | 55 | 62 |
| Dichte | g/cm³ | 1,183 | 1,070 | 1,088 | 1,072 | 1,089 |
| Gasdurchlässigkeit | 10⁻¹⁷ m²/Pas | 3,89 | 3,62 | 3,31 | 3,89 | 3,46 |
| Modulus 100 | MPa | 1,9 | 1,0 | 1,7 | 1,2 | 2,7 |
| Modulus 200 | MPa | 4,6 | 2,2 | 3,9 | 2,9 | 5,8 |
| Modulus 300 | MPa | 7,6 | 3,9 | 5,8 | 4,9 | 8,3 |
| Modulus 300/ Modulus 100 | - | 4,0 | 4,1 | 3,5 | 4,0 | 3,1 |
| Zugfestigkeit | MPa | 12,0 | 6,6 | 6,3 | 8,5 | 8,6 |
| Bruchdehnung | % | 494 | 510 | 352 | 486 | 323 |

Wie **Tabelle 4** entnommen werden kann ist beim Einsatz von HTC-Lignin ein gutes Werteniveau der physikalischen Kenndaten erreichbar. Die Verstärkungseigenschaften zeigen einen Verstärkungsindex, der, je nach Füllgrad (gleiche Gewichtsdosierung oder gleiche Volumendosierung) auf dem Niveau der Vergleichsmischung liegt. Die Moduli können je nach BET-Oberfläche und Dosierung eingestellt werden, so dass verschiedene physikalische Eigenschaften gezielt optimiert werden. Unabhängig von diesen Einstellungen ist die Dichte der Mischungen B1ᵥ -B4ᵥ deutlich niedriger. Sobald die Dosierung von HTC-Lignin größer als "Iso-volumetrisch" ist, ist zudem die Gaspermeation verbessert. Es ist daher mit HTC-Lignin möglich sowohl niedrige Dichte, niedrige Permeation, hohe Bruchdehnung als auf gute Rissbeständigkeit einzustellen. Dabei zeigt Beispiel B1ᵥ (HTC-Lignin mit BET = 20 m²/g) eine Kombination von niedriger Dichte, hoher Bruchdehnung und verringerter Gasdurchlässigkeit.

## Patentansprüche

1. Kautschukzusammensetzung, umfassend
eine Kautschukkomponente, welche mindestens einen Halobutyl-Kautschuk gewählt aus der Gruppe bestehend aus Bromobutyl-Kautschuk und Chlorobutyl-Kautschuk umfasst,
eine Füllstoffkomponente, welche mindestens einen Füllstoff F1 umfasst, der
einen ¹⁴C-Gehalt im Bereich von 0,20 bis 0,45 Bq/g Kohlenstoff besitzt;
einen Kohlenstoffgehalt im Bereich von 60 Gew.-% bis 85 Gew.-% bezogen auf den aschefreien und wasserfreien Füllstoff besitzt;
eine STSA-Oberfläche im Bereich von 10 m²/g Füllstoff bis 50 m²/g Füllstoff aufweist; und
an seiner Oberfläche saure Hydroxylgruppen aufweist;
und wobei
der Anteil an Halobutyl-Kautschuk in der Kautschukzusammensetzung 70 bis 100 phr beträgt

2. Kautschukzusammensetzung gemäß Anspruch 1, **dadurch gekennzeichnet, dass** die Füllstoffkomponente 50 bis 90 phr des Füllstoffs F1 enthält.

3. Kautschukzusammensetzung gemäß einem der Ansprüche 1 oder 2, **dadurch gekennzeichnet, dass** die Kautschukzusammensetzung einen oder mehrere weitere Bestandteile gewählt aus der Gruppe bestehend aus
i. von den Halobutyl-Kautschuken verschiedenen Kautschuken,
ii. von dem Füllstoff F1 verschiedenen Füllstoffen F2,
iii. Weichmachern,
iv. die Haftfähigkeit erhöhenden Harzen, und
v. vulkanisationsfördernden Additiven, enthält.

4. Kautschukzusammensetzung gemäß Anspruch 3, **dadurch gekennzeichnet, dass**
i. die von den Halobutyl-Kautschuken verschiedenen Kautschuke gewählt sind aus der Gruppe bestehend aus Naturkautschuk, ButylKautschuk und Styren-Butadien-Kautschuk, und/oder
ii. die von dem Füllstoff F1 verschiedenen Füllstoffe F2 gewählt sind aus der Gruppe der Ruße und der Schichtsilikate, und/oder
iii. die Weichmacher gewählt sind aus der Gruppe bestehend aus Estern aliphatischer Dicarbonsäuren, paraffinischen Ölen und naphthenischen Ölen, und/oder
iv. die die Haftfähigkeit erhöhenden Harze gewählt sind aus der Gruppe der aliphatischen Kohlenwasserstoffharze, der aromatischen Kohlenwasserstoffharze, der phenolischen Harze, der Phenol-Formaldehyd-Harze und der Phenol-Acetylen-Harze; und/oder
v. die vulkanisationsfördernden Additive gewählt sind aus der Gruppe der der gesättigten Fettsäuren mit 12 bis 24 Kohlenstoffatomen und der Thiazole.

5. Kautschukzusammensetzung gemäß einem der Ansprüche 3 oder 4, **dadurch gekennzeichnet, dass**
i. die von den Halobutyl-Kautschuken verschiedenen Kautschuke in einer Menge von 0 bis 30 phr in der Kautschukzusammensetzung enthalten sind, und/oder
ii. die von dem Füllstoff F1 verschiedenen Füllstoffe F2 in einer Menge von 0 bis 40 phr in der Kautschukzusammensetzung enthalten sind und/oder
iii. die Weichmacher in einer Menge von 0 bis 15 phr in der Kautschukzusammensetzung enthalten sind, und/oder
iv. die die Haftfähigkeit erhöhenden Harze in einer Menge von 0 bis 15 phr in der Kautschukzusammensetzung enthalten sind; und/oder
v. die vulkanisationsfördernden Additive in einer Menge von 0 bis 5 phr in der Kautschukzusammensetzung enthalten sind.

6. Kautschukzusammensetzung gemäß einem oder mehreren der vorangegangenen Ansprüche, wobei es sich beim Füllstoff F1 und einen ligninbasierten Füllstoff handelt.

7. Kautschukzusammensetzung gemäß einem oder mehreren der vorangegangenen Ansprüche, wobei es sich beim Füllstoff F1 um ein hydrothermal carbonisiertes Lignin handelt.

8. Kautschukzusammensetzung gemäß einem der vorangegangenen Ansprüche, wobei der Füllstoff F1
einen Sauerstoffgehalt im Bereich von 15 Gew.-% bis 30 Gew.-% bezogen auf den aschefreien und wasserfreien Füllstoff besitzt; und/oder
die Menge an oberflächenverfügbaren sauren Hydroxylgruppen nach Sipponen im Bereich von 0,05 mmol/g bis 40 mmol/g liegt.

9. Vulkanisierbare Kautschukzusammensetzung, umfassend eine Kautschukzusammensetzung gemäß einem oder mehreren der Ansprüche 1 bis 8 und ein Vulkanisations-System umfassend Zinkoxid und/oder Schwefel.

10. Vulkanisierbare Kautschukzusammensetzung gemäß Anspruch 9, **dadurch gekennzeichnet, dass** das Vulkanisations-System gewählt wird aus der Gruppe folgender Vulkanisations-Systeme umfassend Zinkoxid und
a. mindestens eine gesättigte Fettsäure mit 12 bis 24 Kohlenstoffatomen;
b. mindestens ein Thiuram und/oder Dithiocarbamat, und vorzugsweise keinen Schwefel;
c. mindestens ein Alkylphenoldisulfid;
d. mindestens Polymethylolphenolharz oder ein halogeniertes Polymethylolphenolharz, und vorzugsweise keinen Schwefel und keine schwefelhaltigen Verbindungen;
e. Schwefel und mindestens ein Thiazol und/oder Sulfenamid;
f. Schwefel, mindestens ein Thiazol und/oder Sulfenamid, und mindestens eine gesättigte Fettsäure mit 12 bis 24 Kohlenstoffatomen.

11. Kit-of-Parts, umfassend in räumlich getrennter Form eine Kautschukzusammensetzung (A) gemäß einem oder mehreren der Ansprüche 1 bis 8 und ein Vulkanisations-System (B) wie es in den Ansprüchen 9 oder 10 definiert ist.

12. Verfahren zur Herstellung einer Kautschukzusammensetzung wie sie gemäß einem oder mehreren der Ansprüche 1 bis 8 definiert ist, **dadurch gekennzeichnet, dass** die Kautschukkomponente vorgelegt wird und in diese die Füllstoffkomponente sowie gegebenenfalls Weichmacher, die Haftfähigkeit erhöhende Harze und vulkanisationsfördernde Additive eingearbeitet werden.

13. Verfahren zur Herstellung einer vulkanisierbaren Kautschukzusammensetzung gemäß einem der Ansprüche 9 oder 10, **dadurch gekennzeichnet, dass** in einer ersten Stufe eine Kautschukzusammensetzung gemäß dem Verfahren nach Anspruch 12 hergestellt wird und anschließend in einer zweiten Stufe die Zumischung der Bestandteile des Vulkanisation-Systems erfolgt.

14. Verfahren zur Weiterverarbeitung der erfindungsgemäßen, vulkanisierbaren Kautschukzusammensetzungen wie sie in den Ansprüchen 9 und 10 definiert sind, **dadurch gekennzeichnet, dass** sie durch Kalandrieren, Extrudieren oder im Roller-Head-Verfahren zu einer Bahn geformt werden.

15. Verfahren gemäß Anspruch 14, **dadurch gekennzeichnet, dass** die Bahn eine Dicke im Bereich von 0,3 bis 5 mm besitzt.

16. Verfahren zur Herstellung eines Luftreifens umfassend das Verfahren nach Anspruch 14 oder 15, gefolgt von einem Schritt des Zurechtschneidens der erhaltenen Bahn zu einem Innerliner von Luftreifen und umfassend den nachfolgenden Schritt der Vulkanisation des so erhaltenen Innerliners zusammen mit der Karkasse eines Luftreifens.

17. Verwendung des Füllstoffs F1, wie er in einem der Ansprüche 1, 6, 7 oder 8 definiert ist, zur Herstellung von Kautschukzusammensetzungen für Innerliner.

18. Vulkanisierte Kautschukzusammensetzung, erhältlich durch Vulkanisieren einer vulkanisierbaren Kautschukzusammensetzung gemäß einem der Ansprüche 9 oder 10.

19. Vulkanisierte Kautschukzusammensetzung gemäß Anspruch 18, **dadurch gekennzeichnet, dass** diese
(a) eine Shore-A-Härte gemäß ISO 7619-1 im Bereich von mehr als 50 bis weniger als 70, und/oder
(b) ein Modul 300 gemäß ISO 37 von 3,8 MPa bis 10 MPa; und/oder
(c) eine Dichte bei 23 °C gemäß DIN EN ISO 1183-1: 2018-04 von 0,950 g/cm³ bis 1,120 g/cm³; und/oder
(d) eine Gasdurchlässigkeit bei 70 °C für Luft gemäß ISO 15105 von weniger als 3,9 × 10⁻¹⁷ m²/Pas besitzt.

20. Vulkanisierte Kautschukzusammensetzung gemäß Anspruch 18 oder 19, wobei es sich um den Innerliner eines Luftreifens handelt.

## Claims

1. A rubber composition, comprising
a rubber component, which comprises at least one halobutyl rubber selected from the group consisting of bromobutyl rubber and chlorobutyl rubber,
a filler component which comprises at least one filler F1 that has a ¹⁴C content in the range of 0.20 to 0.45 Bq/g of carbon;
a carbon content in the range of 60 wt.% to 85 wt.% relative to the ash-free and water-free filler;
has an STSA surface area in the range of 10 m²/g of filler to 50 m²/g of filler; and
has acidic hydroxyl groups on its surface;
and wherein
the proportion of halobutyl rubber in the rubber composition is 70 to 100 phr.

2. The rubber composition according to claim 1, **characterised in that** the filler component contains 50 to 90 phr of the filler F1.

3. The rubber composition according to any one of claims 1 or 2, **characterised in that** the rubber composition contains one or more further constituents selected from the group consisting of
i. rubbers that differ from halobutyl rubbers,
ii. fillers F2 that differ from the filler F1,
iii. softening agents,
iv. adhesion-enhancing resins, and
v. additives promoting vulcanisation.

4. The rubber composition according to claim 3, **characterised in that**
i. the rubbers that differ from the halobutyl rubbers are selected from the group consisting of natural rubber, butyl rubber and styrenebutadiene rubber, and/or
ii. the fillers F2 that differ from the filler F1 are selected from the group of the carbon blacks and the phyllosilicates, and/or
iii. the softening agents are selected from the group consisting of esters of aliphatic dicarboxylic acids, paraffinic oils and naphthenic oils, and/or
iv. the adhesion-enhancing resins are selected from the group of aliphatic hydrocarbon resins, aromatic hydrocarbon resins, phenolic resins, phenol formaldehyde resins and phenol acetylene resins; and/or
v. the additives promoting vulcanisation are selected from the group of saturated fatty acids with 12 to 24 carbon atoms and of thiazoles.

5. The rubber composition according to any one of claims 3 or 4, **characterised in that**
i. the rubbers that differ from halobutyl rubbers are contained in the rubber composition in an amount of 0 to 30 phr, and/or
ii. the fillers F2 that differ from the filler F1 are contained in the rubber composition in an amount of 0 to 40 phr, and/or
iii. the softening agents are contained in the rubber composition in an amount of 0 to 15 phr, and/or
iv. the adhesion-enhancing resins are contained in the rubber composition in an amount of 0 to 15 phr; and/or
v. the additives promoting vulcanisation are contained in the rubber composition in an amount of 0 to 5 phr.

6. The rubber composition according to any one or more of the preceding claims, wherein the filler F1 is a lignin-based filler.

7. The rubber composition according to any one or more of the preceding claims, wherein the filler F1 is a hydrothermally carbonised lignin.

8. The rubber composition according to any one of the preceding claims, wherein the filler F1
has an oxygen content in the range of 15 wt.% to 30 wt.% relative to the ash-free and water-free filler; and/or
the amount of acidic hydroxyl groups available on the surface according to Sipponen is in the range of 0.05 mmol/g to 40 mmol/g.

9. A vulcanisable rubber composition, comprising
a rubber composition according to any one or more of claims 1 to 8 and a vulcanisation system comprising zinc oxide and/or sulfur.

10. The vulcanisable rubber composition according to claim 9, **characterised in that** the vulcanisation system is selected from the group of the following vulcanisation systems comprising zinc oxide and
a. at least one saturated fatty acid having 12 to 24 carbon atoms;
b. at least one thiuram and/or dithiocarbamate, and preferably no sulfur;
c. at least one alkyl phenoldisulfide;
d. at least polymethylolphenol resin or a halogenated polymethylolphenol resin, and preferably no sulfur and no sulfur-containing compounds;
e. sulfur and at least one thiazole and/or sulfenamide;
f. sulfur, at least one thiazole and/or sulfenamide, and at least one saturated fatty acid having 12 to 24 carbon atoms.

11. A kit of parts, comprising, in spatially separated form, a rubber composition (A) according to any one or more of claims 1 to 8 and a vulcanisation system (B) as defined in claims 9 or 10.

12. A method for preparing a rubber composition as defined according to any one or more of claims 1 to 8, **characterised in that** the rubber component is provided and the filler component, and optionally softening agents, adhesion-enhancing resins and additives promoting vulcanisation, is incorporated therein.

13. A method for preparing a vulcanisable rubber composition according to any one of claims 9 or 10, **characterised in that,** in a first stage, a rubber composition according to the method of claim 12 is prepared, and subsequently, in a second stage, the admixing of the constituents of the vulcanisation system is performed.

14. A method for further processing the vulcanisable rubber compositions according to the invention as defined in claims 9 and 10, **characterised in that** they are formed into a web by calendering, extrusion or in the roller head process.

15. The method according to claim 14, **characterised in that** the web has a thickness in the range of 0.3 to 5 mm.

16. A method for manufacturing a pneumatic tyre, comprising the method according to claim 14 or 15, followed by a step of cutting to size the web to an inner liner of pneumatic tyres, and comprising the subsequent step of vulcanising the inner liner thus obtained together with the carcass of a pneumatic tyre.

17. A use of the filler F1 as defined in any one of claims 1, 6, 7 or 8, for the preparation of rubber compositions for inner liners.

18. A vulcanised rubber composition, obtainable by vulcanising a vulcanisable rubber composition according to any one of claims 9 or 10.

19. The vulcanised rubber composition according to claim 18, **characterised in that** it
(a) has a Shore A hardness according to ISO 7619-1 in the range of more than 50 to less than 70, and/or
(b) a modulus 300 according to ISO 37 of 3.8 MPa to 10 MPa; and/or
(c) a density at 23 °C according to DIN EN ISO 1183-1: 2018-04 of 0.950 g/cm³ to 1.120 g/cm³; and/or
(d) a gas permeability at 70 °C for air according to ISO 15105 of less than 3.9 x 10⁻¹⁷ m²/Pas.

20. The vulcanised rubber composition according to claim 18 or 19, wherein it is the inner liner of a pneumatic tyre.

## Revendications

1. Composition de caoutchouc, comprenant
un composant de caoutchouc qui comprend au moins un caoutchouc halobutyle, choisi dans le groupe consistant en caoutchouc bromobutyle et caoutchouc chlorobutyle,
un composant de charge ; qui comprend au moins une matière de charge F1 qui
a une teneur en ¹⁴C de l'ordre de 0,20 à 0,45 Bq/g de carbone ;
a une teneur en carbone de l'ordre de 60 % en poids à 85 % en poids par rapport à la matière de charge exempte de cendres et anhydre ;
a une surface STSA de l'ordre de 10 m²/g de matière de charge à 50 m²/g de matière de charge ; et
présente des groupements hydroxyle acides à sa surface ;
et dans laquelle
la proportion du caoutchouc halobutyle dans la composition de caoutchouc est de 70 à 100 pcc (parties pour cent de caoutchouc).

2. Composition de caoutchouc selon la revendication 1, **caractérisée en ce que** le composant de charge contient de 50 à 90 pcc de la matière de charge F1.

3. Composition de caoutchouc selon l'une quelconque des revendications 1 ou 2, **caractérisée en ce que** la composition de caoutchouc contient un ou plusieurs autres ingrédients, choisis dans le groupe consistant en
i. des caoutchoucs qui sont différents des caoutchoucs halobutyle,
ii. des matières de charge F2 qui sont différentes de la matière de charge F1,
iii. plastifiants,
iv. résines augmentant l'adhésivité, et
v. additifs promoteurs de vulcanisation.

4. Composition de caoutchouc selon la revendication 3, **caractérisée en ce que**
i. les caoutchoucs qui sont différents des caoutchoucs halobutyle sont choisis dans le groupe consistant en caoutchouc naturel, caoutchouc butyle et caoutchouc au styrène-butadiène, et/ou
ii. les matières de charge F2 qui sont différentes de la matière de charge F1 sont choisies dans le groupe des noirs de carbone et des phyllosilicates, et/ou
iii. les plastifiants sont choisis dans le groupe consistant en les esters d'acides dicarboxyliques aliphatiques, les huiles paraffiniques et les huiles naphténiques, et/ou
iv. les résines augmentant l'adhésivité sont choisies dans le groupe des résines d'hydrocarbures aliphatiques, des résines d'hydrocarbures aromatiques, des résines phénoliques, des résines phénol-formaldéhyde et les résines phénol-acetylène ;
et/ou
v. les additifs promoteurs de vulcanisation sont choisis dans le groupe des acides gras saturés avec 12 à 24 atomes de carbone et des thiazoles.

5. Composition de caoutchouc selon l'une quelconque des revendications 3 ou 4, **caractérisée en ce que**
i. les caoutchoucs qui sont différents des caoutchoucs halobutyle sont contenus dans la composition de caoutchouc dans une quantité allant de 0 à 30 pcc, et/ou
ii. les matières de charge F2 qui sont différentes de la matière de charge F1 sont contenues dans la composition de caoutchouc dans une quantité allant de 0 à 40 pcc, et/ou
iii. les plastifiants sont contenus dans la composition de caoutchouc dans une quantité allant de 0 à 15 pcc, et/ou
iv. les résines augmentant l'adhésivité sont contenues dans la composition de caoutchouc dans une quantité allant de 0 à 15 pcc ; et/ou
v. les additifs promoteurs de vulcanisation sont contenus dans la composition de caoutchouc dans une quantité allant de 0 à 5 pcc.

6. Composition de caoutchouc selon l'une ou plusieurs des revendications précédentes, dans laquelle la matière de charge F1 est une matière de charge à base de lignine.

7. Composition de caoutchouc selon l'une ou plusieurs des revendications précédentes, dans laquelle la matière de charge F1 est une lignine hydrothermiquement carbonisée.

8. Composition de caoutchouc selon l'une quelconque des revendications précédentes, dans laquelle la matière de charge F1
a une teneur en oxygène de l'ordre de 15 % en poids à 30 % en poids par rapport à la matière de charge exempte de cendres et anhydre ; et/ou la quantité des groupements hydroxyle acides disponibles à la surface selon Sipponen est de l'ordre de 0,05 mmol/g à 40 mmol/g.

9. Composition de caoutchouc vulcanisable, comprenant une composition de caoutchouc selon l'une ou plusieurs des revendications 1 à 8 et un système de vulcanisation comprenant de l'oxyde de zinc et/ou du soufre.

10. Composition de caoutchouc vulcanisable selon la revendication 9, **caractérisée en ce que** le système de vulcanisation est choisi dans le groupe des systèmes de vulcanisation suivants comprenant l'oxyde de zinc et
a. au moins un acide gras saturé avec 12 à 24 atomes de carbone ;
b. au moins un thiurame et/ou dithiocarbamate, et de préférence pas de soufre ;
c. au moins un disulfure d'alkylphénol ;
d. au moins une résine polyméthylol-phénol ou une résine polyméthylol-phénol halogénée, et de préférence pas de soufre et pas des composés sulfurifères ;
e. soufre et au moins un thiazole et/ou sulfènamide ;
f. soufre, au moins un thiazole et/ou sulfènamide, et au moins un acide gras saturé avec 12 à 24 atomes de carbone.

11. Kit de pièces, comprenant, sous forme spatialement séparée, une composition de caoutchouc (A) selon l'une ou plusieurs des revendications 1 à 8 et un système de vulcanisation (B) comme défini dans les revendications 9 ou 10.

12. Procédé pour produire une composition de caoutchouc comme définie selon l'une ou plusieurs des revendications 1 à 8, **caractérisé en ce qu'**on fournit le composant de caoutchouc et ensuite on incorpore dans celui-ci le composant de charge et, le cas échéant, des plastifiants, des résines augmentant l'adhésivité et des additifs promoteurs de vulcanisation.

13. Procédé pour produire une composition de caoutchouc vulcanisable selon l'une quelconque des revendications 9 ou 10, **caractérisé en ce que** dans un premier étage on produit une composition de caoutchouc selon le procédé selon la revendication 12, et ensuite, dans un second étage, on ajoute les ingrédients du système de vulcanisation.

14. Procédé de traitement ultérieur des compositions de caoutchouc vulcanisables selon l'invention comme définies dans les revendications 9 et 10, **caractérisé en ce qu'**elles sont mises en forme de bande par laminage, extrusion ou dans un procédé « rollerhead ».

15. Procédé selon la revendication 14, **caractérisé en ce que** la bande a une épaisseur de l'ordre de 0,3 à 5 mm.

16. Procédé pour la fabrication d'un pneumatique comprenant le procédé selon la revendication 14 ou 15, suivi d'une étape de découpage de la bande obtenue en une doublure intérieure (« innerliner ») de pneumatique et comprenant l'étape suivante de vulcanisation de la doublure intérieure ainsi obtenue avec la carcasse d'un pneumatique.

17. Utilisation de la matière de charge F1 comme définie dans l'une quelconque des revendications 1, 6, 7 ou 8, pour la fabrication des compositions de caoutchouc pour des doublures intérieures de pneumatique.

18. Composition de caoutchouc vulcanisée qui peut être obtenue par la vulcanisation d'une composition de caoutchouc vulcanisable selon l'une quelconque des revendications 9 ou 10.

19. Composition de caoutchouc vulcanisée selon la revendication 18, **caractérisée en ce qu'**elle
(a) a une dureté Shore A selon ISO 7619-1 de l'ordre de plus de 50 à moins de 70, et/ou
(b) un module 300 selon ISO 37 allant de 3,8 MPa à 10 MPa ; et/ou
(c) une densité à 23 °C selon DIN EN ISO 1183-1 : 2018-04 allant de 0,950 g/cm³ à 1,120 g/cm³ ; et/ou
(d) une perméabilité aux gaz à 70 °C pour l'air selon ISO 15105 inférieure à 3,9 × 10⁻¹⁷ m²/Pas.

20. Composition de caoutchouc vulcanisée selon la revendication 18 ou 19, étant la doublure intérieure d'un pneumatique.
